# EUROPÄISCHE PATENTSCHRIFT

(11) **EP 2 548 411 B1**
(45) Veröffentlichungstag und Bekanntmachung des Hinweises auf die Patenterteilung: **06.05.2020**
(21) Anmeldenummer: 11710175.8
(22) Anmeldetag: 21.03.2011
(51) Int. Cl.: H05B 33/08

(54) **MODULARES LED-BELEUCHTUNGSSYSTEM**
MODULAR LED-LIGHTING SYSTEM
SYSTÈME D'ÉCLAIRAGE À DEL MODULAIRE

(30) Priorität: 12.07.2010 DE 102010031244; 09.04.2010 DE 102010014594; 19.03.2010 DE 102010003060
(43) Veröffentlichungstag der Anmeldung: 23.01.2013
(73) Patentinhaber: Tridonic AG, 8755 Ennenda (CH); Tridonic GmbH & Co KG, 6851 Dornbirn (AT)
(72) Erfinder: ZIMMERMANN, Michael, CH-8888 Heiligkreuz (CH); PEREIRA, Eduardo, CH-8854 Siebnen (CH); HARTMANN, Martin, A-6850 Dornbirn (AT)
(74) Vertreter: Rupp, Christian
(86) Internationale Anmeldenummer: PCT/EP2011/054184
(87) Internationale Veröffentlichungsnummer: WO 2011/113951

(56) Entgegenhaltungen:
- WO-A1-2007/147242
- CN-A- 101 668 369
- DE-A1- 10 230 154
- DE-A1-102004 002 018
- DE-U1-202008 002 883
- DE-U1-202008 012 421
- US-A1- 2008 018 261
- US-A1- 2010 026 187
- US-A1- 2011 080 102

## Beschreibung

Die vorliegende Erfindung bezieht sich ganz allgemein auf den Betrieb von LEDs, wobei darunter anorganische LEDs wie auch organische LEDs (OLEDs) zu verstehen sind.

Grundsätzlich ist es bereits bekannt, eine LED-Strecke, die eine oder mehrere in Serie geschaltete LEDs aufweisen kann, ausgehend von einer Konstantstromquelle mit elektrischer Leistung zu versorgen. Es ist ebenfalls bekannt, zur Ausführung eines Dimmens eine PWM-Modulation zu verwenden, so dass in den Einschaltzeitdauern eines PWM-Impulszugs die genannte Konstantstromregelung durchgeführt wird. Beim Dimmen wird also dann das Tastverhältnis des PWM-Signals verändert.

Zur Bereitstellung der Versorgungsspannung der Konstantstromquelle kann beispielsweise eine aktiv getaktete PFC-Schaltung (Power Factor Correction Circuit, Leistungsfaktorkorrekturschaltung) verwendet werden.

Schließlich sind auch noch weitere Anforderungen beim Betrieb von LEDs zu beachten, beispielsweise dass üblicherweise eine galvanische Trennung zwischen der LED-Strecke und der Versorgungspannung des PFCs, typischerweise eine Netzwechselspannung, gefordert wird.

Aus dem obigen ergibt sich, dass zu einem ordnungsgemäßen und vorteilhaften Betrieb einer LED-Strecke funktional mehrere Schaltungsblöcke vorliegen müssen (Gleichrichter, PFC, galvanische Trennung, Konstantstromquelle etc.). Dies führt gegebenenfalls zu relativ komplexen Schaltungen.

Das Dokument US 2011/0080102 A1 zeigt ein Beleuchtungssystem mit einem Betriebsgerät für LED-Leuchtmittel.

Das Dokument DE 102 30 154 A1 zeigt eine Versorgungseinheit für LED-Einheiten, welche ausgebildet ist, um einen Widerstand auszulesen, dessen Höhe Aufschluss über die Leistungstragfähigkeit des angeschlossenen Leuchtmittels liefert.

Die Erfindung macht nunmehr mehrere Ansätze, wie eine LED-Strecke in besonders vorteilhafter Weise betrieben werden kann.

Diese Aufgabe wird gelöst durch die Merkmale der unabhängigen Ansprüche. Die abhängigen Ansprüche bilden den zentralen Gedanken der Erfindung in besonders vorteilhafter Weise weiter.

Teile der folgenden Beschreibung und Zeichnungen, welche sich auf Ausführungsbeispiele beziehen, welche nicht von den Ansprüchen abgedeckt werden, werden nicht als Ausführungsbeispiele der Erfindung, sondern als Beispiele zur Verdeutlichung der Erfindung, gezeigt.

Ein erster Aspekt der Erfindung sieht vor eine modulare LED-Beleuchtung, aufweisend ein erstes Modul, dem eine Eingangsspannung, vorzugsweise eine AC-Versorgungsspannung, zuführbar ist und das aufweist:
- ein zweites Untermodul, vorzugsweise eine Isoliereinheit, an deren Ausgang eine galvanisch von der Versorgungsspannung getrennte DC-Spannung bereitgestellt ist, und
- eine Steuereinheit,
weiterhin aufweisend ein zweites Modul, vorzugsweise ein Lampenmanagementmodul, das ein mit der DC-Ausgangsspannung des ersten Moduls versorgtes weiteres Untermodul, vorzugsweise eine getaktete Konstantstromquelle, aufweist, die von einer Steuereinheit des zweiten Moduls gesteuert ist, und - ein LED-Modul, das wenigstens eine LED-Strecke aufweist und das von dem weiteren Untermodul versorgt ist.

Die Steuereinheit des ersten Moduls und die Steuereinheit des zweiten Moduls können über eine Kommunikationsschnittstelle kommunizieren.

Die interne Datenkommunikation zwischen erstem Modul und dem zweiten Modul kann standardisiert erfolgen, d.h. unabhängig von einer externen Bus-Kommunikation des ersten Moduls.

Das erste Modul kann neben der DC-Versorgungsspannung für das weitere Untermodul auch eine DC-Niedervoltspannungsversorgung für das zweite Modul bereitstellen.

Das zweite Modul und das LED-Modul können in einem gemeinsamen Gehäuse untergebracht sein.

Mit dem gemeinsamen Gehäuse kann ein aktives und/oder passives Kühlmittel verbunden sein.

Die Steuereinheit des ersten Moduls kann vorzugsweise unter Potentialtrennung durch eine Schnittstellenschaltung über einen externen Bus ansprechbar sein.

Das zweite Modul kann ein isolierter energergieübertragender DC/DC-Wandler sein.

Von dem ersten Modul können mehrere zweite Module mit DC-Spannung versorgt werden.

Das erste Modul kann ein oder mehrere angeschlossene zweiten Module parallel mit wenigstens zwei DC-Spannungen mit unterschiedlichem Pegel versorgen.

Weitere Vorteile, Merkmale und Eigenschaften der Erfindung werden aus der folgenden Beschreibung bevorzugter Ausführungsbeispiele und unter Bezugnahme auf die beigefügten Figuren ersichtlich werden.
- Fig. 1: zeigt den modularen Aufbau eines erfindungsgemäßen modularen LED-Beleuchtungssystems.
- Fig. 2: zeigt ein Ausführungsbeispiel für einen isolierten DC/DC-Wandler, in Form eines Wechselrichters mit folgerndem Resonanzkreis und Transformator.
- Fig. 3: schematisch weitere Steuermodi für den DC/DC-Wandler von Figur 2.
- Fig. 4: zeigt die erfindungsgemäße Kommunikation zwischen einer Mastereinheit und mehreren Slave-Einheiten des modularen LED-Beleuchtungssystems.
- Fig. 5: zeigt die erfindungsgemäße Erzeugung einer DC-Niedervoltspannung.
- Fig. 6a und 6b: zeigen das LED-Modul mit mehreren voneinander unabhängigen steuerbaren Kanälen.

### Allgemeiner Aufbau des modularen Schaltungskonzepts:

Es soll nunmehr der allgemeine Aufbau des modularen erfindungsgemäßen Schaltungskonzepts für eine LED-basierte Beleuchtung, beispielsweise für ein sogenanntes 'Downlight' (in die Decke eingelassener Strahler) erläutert werden. Es können sowohl anorganische LEDs und / oder organische LEDS (OLED) eingesetzt werden.

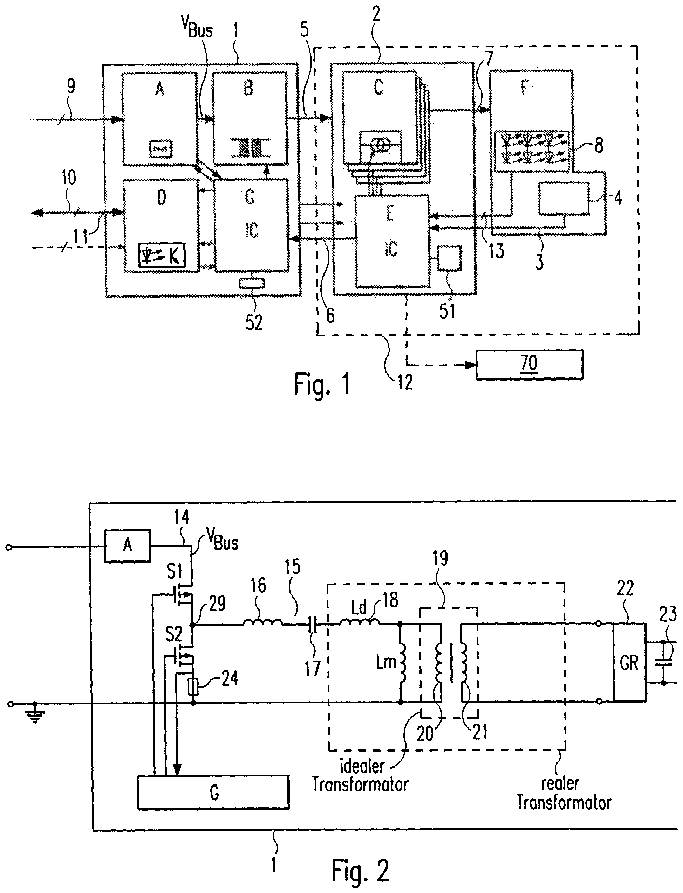

Wie in Figur 1 ersichtlich, weist das erfindungsgemäße modulare Schaltungskonzept ein erstes Modul 1 auf, das vorzugsweise mit der Eingangsspannung 9, insbesondere Netz-Wechselspannung, versorgt ist. Diese Eingangsspannung 9 wird einem ersten Untermodul A zugeführt, das typischerweise eine Gleichrichtung der als Eingangsspannung 9 zugeführten Wechselspannung ausführt, wobei dann die gleichgerichtete Wechselspannung einer aktiv getakteten PFC (Power Factor Correction)-Schaltung des Untermoduls A, falls vorhanden, zugeführt wird. Die Ausgangsspannung des ersten Untermoduls A ist eine DC-Spannung, im Folgenden 'Busspannung V_{Bus}' genannt, die einem zweiten Untermodul B des ersten Moduls 1 zugeführt wird. Das zweite Untermodul B weist im Wesentlichen die Funktion einer galvanischen Trennung (Isolierung) auf und kann dazu beispielsweise als galvanisches Trennelement einen Transformator aufweisen. Zusätzlich dient das zweite Untermodul B zur Bereitstellung einer stabilisierten Gleichspannung, der DC-Versorgungsspannung 5.

Mit dem Untermodul G ist eine Steuereinheit des Moduls 1 bezeichnet, die insbesondere als integrierte Schaltung, wie beispielsweise ASIC oder Mikroprozessor bzw. Hybrid davon implementiert sein kann. Wie schematisch in Figur 1 gezeigt, steuert diese Steuereinheit G aktive Schaltelemente des zweiten Untermoduls B an, die beispielsweise in Form einer Halbbrücke (beispielsweise eines Halbbrückentreibers und zweier Schalter in Serie, siehe im Folgenden Fig. 2) ausgestaltet sein können, der eine den Transformator 19 des zweiten Untermoduls B zugeführte Wechselspannung erzeugt. Die Steuereinheit G kann über Programmiereingänge verfügen, wodurch eine Programmierung oder Kalibrierungsprogrammierung der Steuereinheit G möglich ist. Dafür können die Anschlüsse der Steuereinheit G auf die Platine des zweiten Untermoduls B herausgeführt werden, um eine Programmierung dieses Untermoduls B und somit der Steuereinheit G auch nach Auslieferung des Untermoduls B zu ermöglichen.

Mit dem zweiten Untermodul B des ersten Moduls 1 ist eine galvanische Entkopplung bezeichnet, über die die Steuereinheit G des Moduls 1 mit dem Untermodul D als Schnittstellenschaltung kommuniziert. Diese Schnittstellenschaltung D kann eine Datenschnittstelle 11 aufweisen, die insbesondere zur Anbindung eines externen analogen oder digitalen Busses 10, beispielsweise gemäß dem DALI-Industriestandard, ausgebildet sein kann. Alternativ oder zusätzlich können aber auch unidirektionale oder bidirektionale Signale an dieser Datenschnittstelle 11 bzw. Schnittstellenschaltung D gemäß anderen Standards übertragen werden. Weiterhin können an dieser Datenschnittstelle 11 bzw. Schnittstellenschaltung D alternativ oder zusätzlich Signale empfangen werden, die ausgehend von einem durch die Datenschnittstelle 11 bzw. Schnittstellenschaltung D selbst oder extern (beispielsweise ebenfalls über die Eingangsspannung 9) versorgten manuell zu betätigenden Taster oder Schalter erzeugt werden.

Die wesentlichen Funktionen des ersten Moduls 1 sind somit die Bereitstellung (am Ausgang des zweiten Untermoduls B) einer DC-Spannung (durch Gleichrichtung der Ausgangsspannung des Transformators 19 des zweiten Untermoduls B mit dem Gleichrichter 22) ausgehend von einer zugeführten Eingangsspannung 9 sowie die externe Kommunikation über die Datenschnittstelle 11 bzw. Schnittstellenschaltung D.

Vorzugsweise räumlich getrennt von dem genannten ersten Modul 1 ist ein zweites Modul 2 als Schaltungsmodul vorgesehen. Dieses zweite Modul 2 hat im Wesentlichen die Funktion des sogenannten `Lampenmanagements`, was bedeutet, dass dieses zweite Modul 2 einerseits die angeschlossenen Leuchtmittel (hier die LED-Strecke 8 mit einer oder mehreren LEDs) mit Konstantstrom versorgt und andererseits Rückführgrößen (schematisch mit 13 bezeichnet) aus dem Bereich der LED-Strecke 8 erhält.

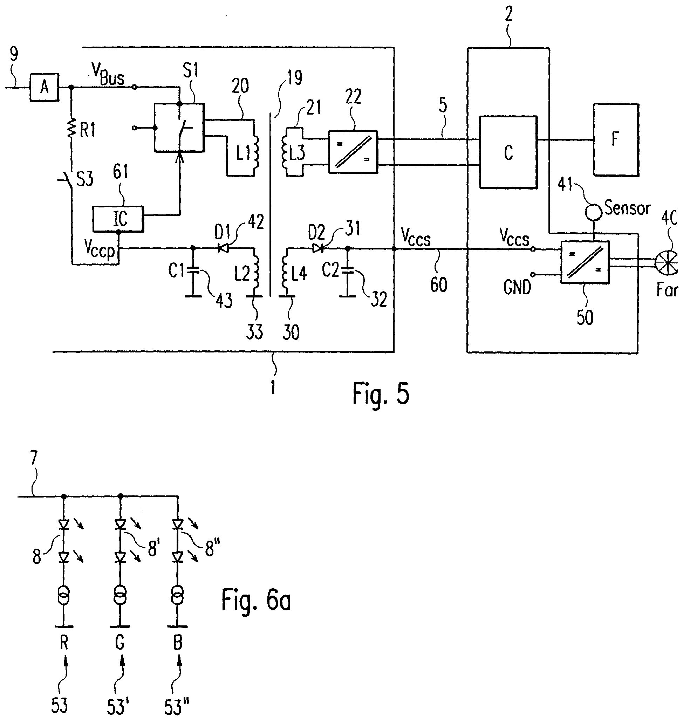

Die DC-Versorgungsspannung 5 am Ausgang des zweiten Untermoduls B des ersten Moduls 1 wird also einem weiteres Untermodul C, als steuer-/regelbaren Konstantstromquelle, zugeführt. Dieses weitere Untermodul C versorgt also über einen Ausgang 7 die LED-Strecke mit Konstantstrom. Das zweite Modul 2 kann dabei mehrere Konverterstufen (mehrere weitere Untermodule C als Konstantstromquellen) enthalten, wobei diese Konverterstufen (weitere Untermodule C als Konstantstromquellen) jeweils voneinander getrennte (unabhängige) LED-Strecken 8 ansteuern können.
Das weitere Untermodul C kann sowohl als getaktete Konstantstromquelle (also beispielsweise als Tiefsetzsteller auch Buck-Konverter genannt oder isolierter Sperrwandler auch Flyback-Konverter genannt) oder als Linearregler (realisiert mit Transistoren oder integrierten Schaltkreisen) ausgeführt sein. Ein Beispiel für eine Ansteuerung mittels Linearregler ist schematisch in Figur 6a dargestellt.

Weiterhin weist das zweite Modul 2 eine eigene Steuereinheit E auf, die wiederum als Mikrocontroller, ASIC oder Hybrid davon ausgebildet sein kann. Diese Steuereinheit E des zweiten Moduls 2 enthält also Rückführgrößen 13 aus dem Bereich der LED-Strecke 8. Die Steuereinheit E steuert die eine oder mehreren weiteren Untermodule C im zweiten Modul 2 an. Dabei wird der Strom durch die LED-Strecke 8 geregelt, es können zum korrekten Betrieb der LEDs und zur Fehlererkennung aber auch weitere Rückführgrößen erfasst und überwacht werden wie beispielsweise die LED-Spannung oder die Temperatur.

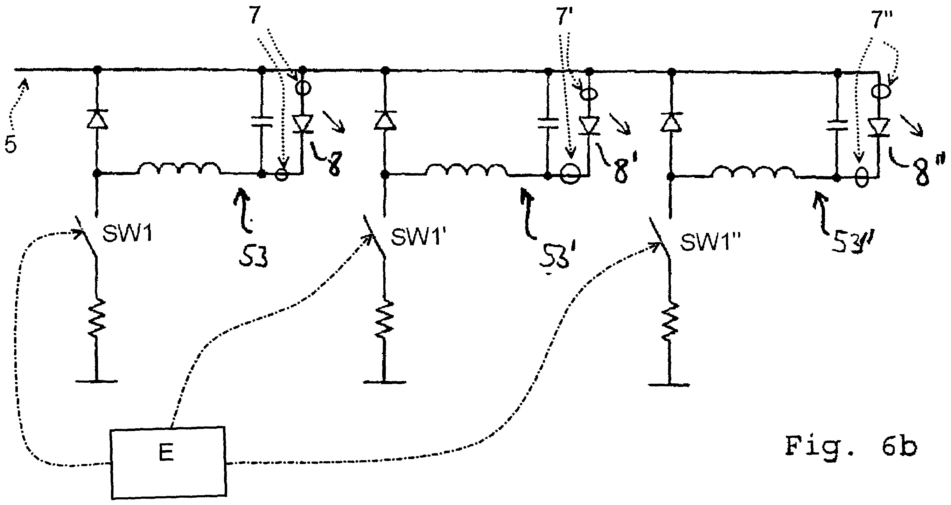

In einer bevorzugten Ausführungsform ist das weitere Untermodul C als getaktete Konstantstromquelle ausgeführt, wobei dieses Untermodul C zumindest einen aktiv getakteten Schalter SW1 als Teil der getakteten Konstantstromquelle aufweist. Ein Beispiel für eine Ansteuerung mittels getakteter Konstantstromquelle ist schematisch in Figur 6b dargestellt. In dieser schematischen Darstellung sind aus Gründen der Übersichtlichkeit keine Erfassungen von Rückführgrößen wie beispielsweise des LED-Stromes, der LED-Spannung oder des Stromes durch den Schalter SW1 dargestellt. Bei diesem Beispiel werden die LEDs der LED-Strecken 8, 8', 8'' (die beispielsweise auf einem LED-Modul F angeordnet sind) durch jeweils einen Tiefsetzsteller als getaktete Konstantstromquelle über die Ausgänge 7, 7', 7'' gespeist.

Der aktiv getaktete Schalter der getakteten Konstantstromquelle wird dabei direkt oder indirekt (beispielsweise über einen Treiberbaustein) durch die Steuereinheit E angesteuert. Der Einsatz einer getakteten Konstantstromquelle ermöglicht im Unterschied zu einem Linearregler einen flexiblen Betrieb von unterschiedlichen LED-Modulen F. Die getaktete Konstantstromquelle kann sowohl die Spannung als auch den Strom durch das LED-Modul F einstellen und anpassen. Die getaktete Konstantstromquelle stellt einen aktiv getakten DC-DC-Wandler dar, der die DC-Versorgungsspannung 5 aufnimmt und das LED-Modul F entsprechend mit dem gewünschten LED-Strom und / oder LED-Spannung speist, vorzugsweise durch eine Ansteuerung durch die Steuereinheit E aufgrund der dieser Steuereinheit E zugeführten Rückführgrößen.

Die getaktete Konstantstromquelle bietet weiterhin den Vorteil, dass der Betriebsmodus des Untermoduls C an die jeweilige aktuelle Betriebsart angepaßt werden kann. So kann die Art der Taktung der getakteten Konstantstromquelle angepasst werden, beispielsweise kann der Schalter SW1 mit einem frequenzmoduliertem, pulsweitenmodulierten oder einer Kombination von Frequenzmoduliertem und pulsweitenmodulierten Signal angesteuert werden. Die aktuelle Betriebsart kann sich beispielsweise für einen Betrieb bei hoher Helligkeit der LED-Strecke 8 und bei niedriger Helligkeit unterscheiden.

Wie bei dem Beispiel der Fig. 6b dargestellt, ist es möglich, dass mehrere getaktete Konstantstromquellen zur Speisung der LED-Strecken 8, 8', 8'' über die Ausgänge 7, 7', 7'' vorhanden sind. Vorzugsweise sind die Schalter SW1, SW1', SW1'' der einzelnen getaktete Konstantstromquellen unabhängig voneinander durch die Steuereinheit E ansteuerbar. Somit wird ermöglicht, dass für jede LED-Strecken 8, 8', 8'' jeweils die individuell erforderlichen LED-Ströme und LED-Spannungen über die Ausgänge 7, 7', 7'' geliefert werden können. Dabei ist es auch möglich, dass jeweils eine separate Steuereinheit E, E', E'' für jede der getakteten Konstantstromquellen mit den Schaltern SW1, SW1', SW1'' vorhanden ist.

Wie bereits erwähnt, kann die Steuereinheit E zum korrekten Betrieb der LEDs und zur Fehlererkennung verschiedene Rückführgrößen erfassen (wie beispielsweise die LED-Spannung, den LED-Strom oder die Temperatur) und vorzugsweise bei Erfassung eines Fehlers die getaktete Konstantstromquelle in einen Fehlerbetriebsmodus umschalten. Dies kann beispielsweise durch einen Wechsel in einen Burst-Modus oder einen Betrieb mit geringer Einschaltzeit des Schalters SW1 erfolgen.

Darüber hinaus kann die Steuereinheit E über eine Kommunikationsschnittstelle 6, die zusätzlich zu der DC-Versorgungsspannung 5 ausgeführt ist, mit der Steuereinheit G des ersten Moduls 1 unidirektional oder bidirektional in Datenkommunikation stehen. Die Kommunikationsschnittstelle 6 kann auch zur Übertragung der Niedervoltversorgung genutzt werden (es erfolgt dann sowohl eine Datenkommunikation als auch eine Energieübertragung). Die Kommunikationsschnittstelle 6 kann auch in die DC-Versorgungsspannung 5 integriert sein, beispielsweise kann die Polarität der DC-Versorgungsspannung 5 umgeschaltet werden oder ein Trägersignal auf die DC-Versorgungsspannung 5 aufmoduliert werden.

Über die Kommunikationsschnittstelle 6 kann die Steuereinheit E auch beispielsweise im Falle einer Fehlererkennung mittels der bidirektionalen Datenkommunikation eine Fehlermeldung und vorzugsweise auch eine Information über die Art des Fehlers an die Steuereinheit G des ersten Moduls 1 übermitteln.

Wie in Figur 1 schematisch dargestellt, ist das zweite Modul 2, hier als Lampenmanagementmodul, vorzugsweise in einem gemeinsamen Gehäuse 12 mit dem eigentlichen LED-Modul F untergebracht.

Wie in Figur 1 schematisch dargestellt, kann das LED-Modul F einen eigenen Speicher 4, beispielsweise in Form eines Eproms aufweisen. Mit dem Bezugszeichen 3 ist schematisch bezeichnet, dass die Steuereinheit E des zweiten Moduls 2 auf diesen Speicher 4 des LED-Moduls F zugreifen kann.

Hinsichtlich des ersten Moduls 1 ist darauf hinzuweisen, dass die PFC-Schaltung nur fakultativ ist.

Darüber hinaus ist darauf hinzuweisen, dass die dargestellten Funktionen der Untermodule A, B und C schaltungstechnisch auch integriert sein können, so dass, solange diese Funktionen grundsätzlich vorliegen, diese sich nicht in einem entsprechenden Aufbau der Schaltungstopologie widerspiegeln müssen.

Der Vorteil des modularen Aufbaus gemäß Fig. 1 ist es, beispielsweise dass das erste Modul 1 bzw. das zweite Modul 2 von unterschiedlichen Herstellern produziert werden können. Darüber hinaus können an ein erstes Modul 1 auch mehrere zweite Module 2 im Sinne eines Master/Slave-Betriebs angeschlossen werden. Bei einem Einsatz von getakteten Konstantstromquellen als Untermodul C wird somit ein zweistufiges System mit modularem Aufbau geschaffen, wobei mehrere zweite Module 2 an ein erstes Modul 1 angeschlossen werden können und auch ein Betrieb unterschiedlicher LED-Module F und / oder ein unterschiedlicher Betrieb gleicher LED-Module F abhängig von der über die Kommunikationsschnittstelle 6 erfolgenden Datenkommunikation wird ermöglicht.

Schließlich erlaubt der modulare Aufbau auch, dass die entsprechenden Untermodule und insbesondere das zweite Modul 2 unter Beibehaltung der übrigen Bestandteile austauschbar sind.

Wenn das zweite Modul 2 in einem gemeinsamen Gehäuse 12 mit dem eigentlichen LED-Modul F untergebracht ist, ergibt sich der Vorteil, dass diese Kombination aus zweitem Modul 2 und LED-Modul F in sich justiert werden kann, sodass beispielsweise deren Abstrahlungscharakteristik, Lichtmenge, Lichtfarbe und / oder Lichtlenkung parametrisiert und somit abgeglichen werden kann. Das erste Modul 1 und auch der Nutzer können somit über ein oder mehrere abgeglichene Systeme verfügen, die bei dann aber gleich ansteuern lassen und auch dementsprechend verhalten. Dieser interne Abgleich der Kombination aus zweitem Modul 2 und LED-Modul F kann beispielsweise über eine der folgenden Methoden erfolgen:
- Abgleich in der Fertigung oder bei der Inbetriebnahme
- ein geschlossenes Regelsystem innerhalb dieser Kombination (beispielsweise mittels eines internen Sensorsystems)
- Stützwerte
- Verfahren mit LED Charakterisierung
- oder eine Kombination aus den genannten Verfahren.

Die Kommunikation zwischen dem ersten Modul 1 und dem zweiten Modul 2 über die Kommunikationsschnittstelle 6 erfolgt dementsprechend vorzugsweise standardisiert.

Von außen beispielsweise über eine Busleitung des externen Busses 10 über die Datenschnittstelle 11 eingehende Befehle oder Abfragen werden wie dargestellt nur dem ersten Modul 1 zugeführt. Dies kann somit als externe Datenkommunikation bezeichnet werden, im Gegensatz zu der internen Datenkommunikation über die Kommunikationsschnittstelle 6 zwischen dem ersten Modul 1 und dem zweiten Modul 2.

Dies hat den Vorteil, dass zur Anpassung an unterschiedliche externe Busse 10 nur das erste Modul 1 anzupassen ist, während der Aufbau und das Datenprotokoll für das zweite Modul 2 davon unberührt bleibt.

Die Kommunikation über die interne Kommunikationsschnittstelle 6 ist somit auch standardisiert, da sie unabhängig von unterschiedlichen an das erste Modul 1 anlegbaren Busprotokollen oder Steuersignalen ist.

Die Kommunikation über die interne Kommunikationsschnittstelle 6 kombiniert mit dem modularen Aufbau des Systems ergibt den Vorteil, dass von dem zweiten Modul 2 die Betriebsdaten für die optimale Speisung des zweiten Moduls 2 übertragen werden können. Das zweite Modul 2 (vorzugsweise von der Steuereinheit E ausgehend) kann die erforderlichen Betriebsdaten über die interne Kommunikationsschnittstelle 6 an das erste Modul 1 übermitteln. Dies bietet den Vorteil, dass ein erstes Modul 1 mit vielen verschiedenen zweiten Modulen 2 kombiniert werden kann, wobei die erforderlichen Betriebsdaten dabei aus dem zweiten Modul 2 ausgelesen werden können.

Beispiele für die Rückführgrößen 13 von der LED-Strecke 8 sind der direkt oder indirekt gemessene LED-Strom und/oder die Spannung über der LED-Strecke 8.

In dem Speicher 4, der dem LED-Modul F zugeordnet ist, können Betriebsdaten für die LEDs der LED-Strecke 8 beispielsweise beim Hersteller abgelegt werden. Diese Daten in diesem Speicher 4 können also beispielsweise Kennwerte sein, die zulässige Maximalwerte für Strom und/oder Spannung, Temperaturabhängigkeit von elektrischen oder optischen (Spektren) Parametern der LEDs, etc. Auch diese Betriebsdaten für die LEDs (beispielsweise Daten aus dem Speicher 4) können über die interne Kommunikationsschnittstelle 6 an das erste Modul 1 übermittelt werden.

Wie bereits oben kurz ausgeführt, kann ein erstes Modul 1 im Sinne eines Masters mehrere zweite Module 2 versorgen. Dies bedeutet, dass ein einziges erstes Modul 1 mehrere zweite Module 2 nicht nur mit einer DC-Versorgungsspannung 5 versorgt, sondern auch mit diesen bidirektional im Sinne einer internen Kommunikationsschnittstelle 6 kommuniziert.

Die Steuereinheit G in dem ersten Modul 1 kann wie oben bereits kurz erläutert das vorzugsweise getaktet ausgeführte zweite Untermodul B ansteuern. Dieselbe Steuereinheit G oder vorzugsweise auch eine weitere (nicht dargestellte) Steuereinheit kann auch den Betrieb des PFCs des ersten Untermoduls A regeln, d. h. beispielsweise den Schalter des PFCs des Untermoduls A ansteuern und für Signale aus dem Bereich des PFCs, wie beispielsweise die Eingangsspannung, den Strom durch eine Induktivität des PFCs, den Strom durch den Schalter des PFCs, die Ausgangsspannung des PFCs, entgegennehmen, wie schematisch durch Pfeile in Fig. 1 dargestellt ist.

Bei dem PFC kann es sich beispielsweise um einen Hochsetzsteller (Boost-Konverter), Sperrwandler (Buck-Boost-Konverter, einen isolierten Sperrwandler (Flyback-Konverter) oder auch SEPIC Konverter handeln.

Typischerweise liegt dabei die Ausgangsspannung (Busspannung) V_{Bus} des PFCs des ersten Untermoduls A in einem Bereich von mehreren hundert Volt DC. Aufgrund des Transformators 19 in dem zweiten Untermodul B kann somit diese DC-Spannung heruntergesetzt werden, beispielsweise auf eine Spannung im Bereich von 20 bis 60 Volt, vorzugsweise 40 bis 50 Volt DC. Somit ist die DC-Versorgungsspannung 5 nach dem Ausgang des ersten Moduls 1 in einem niedrigeren Pegel als die intern in dem ersten Modul 1 herrschenden Spannungen, was für die Anforderungen beispielsweise an die Isolierung der DC-Versorgungsspannung 5 des zweiten Moduls 2 sowie an das zweite Modul 2 selbst niedrigere Ansprüche stellt. Zusätzlich kann optional eine zweite Ausgangsspannung, beispielsweise eine DC-Niedervoltversorgung für das zweite Modul 2, in dem ersten Modul 1 erzeugt werden und dem zweiten Modul 2 bereitgestellt werden.

Ein Vorteil des modularen Aufbaus mit interner Kommunikationsschnittstelle 6 wie oben geschildert ist, dass das zweite Modul 2 (oder bei dem Vorhandensein mehrerer zweiter Module 2 zumindest einzelne dieser) abgeschaltet werden kann, während das erste Modul 1 weiterhin für die Kommunikationsschnittstelle 6 ansprechbar ist oder ggf. auch über die Kommunikationsschnittstelle 6 Meldungen absenden kann. Somit kann das erste Modul 1 eine Notlichterkennung ausführen (Umschalten von AC auf DC-Versorgung oder gleichgerichtete AC-Versorgung). Darüber hinaus kann die Steuereinheit G, beispielsweise als Mikrocontroller, des ersten Moduls 1 in diesem Ruhezustand nur über den externen Bus 10 mit Leistung versorgt werden, wenn der Ruhezustand des externen Bus 10 (wie beispielsweise bei DALI) ungleich 0 Volt ist. Es kann also eine über den externen Bus 10 übertragene Energie zur Versorgung der Steuerschaltung G (insbesondere als Anlaufenergie für die Steuerschaltung G oder eine NiedervoltVersorgungsschaltung) genutzt werden. Somit kann die eigentliche Spannungsversorgung des ersten Moduls 1 in diesem Ruhezustand abgeschaltet werden. Es ist auch möglich, dass über den externen Bus 10 nur ein Aufwecksignal gesendet wird, welches eine Anlaufenergie als Leistung zur kurzzeitigen Versorgung für die Steuerschaltung G oder eine Niedervoltversorgungsschaltung bereitstellt. In diesem Fall kann auch das erste Modul 1 komplett in einen Ruhezustand ohne Energieaufnahme versetzt werden. Das Aufwecksignal kann auch eine Datenübertragung oder ein kurzzeitiges Zuschalten einer Spannung sein.

Wenn mehrere zweite Module 2 durch ein erstes Modul 1 (Zentralmodul) versorgt werden, können natürlich selektiv ausgewählte dieser mehreren zweiten Module 2 abgeschaltet werden. Auch dies führt zu einer Einsparung von elektrischen Verlusten. Beispielsweise im Notlichtfall kann vorgesehen sein, dass zum Erreichen der geringeren Grundhelligkeit für den Notlichtbetrieb nur eines bzw. eine Untergruppe der mehreren von dem ersten Modul 1 versorgten zweiten Module 2 betrieben wird.

Mit dem gemeinsamen Gehäuse 12 ist ein passives oder vorzugsweise aktives, insbesondere von der Steuereinheit E angesteuertes Kühlmittel 40 verbunden, bspw. ein Ventilator oder eine Kühleinheit.

Zusätzlich zu der Kommunikationsschnittstelle 6 kann das zweite Modul 2 (Lampenmanagement-Modul) auch eine zusätzliche Schnittstelle (nicht dargestellt) aufweisen. Diese zusätzliche Schnittstelle kann beispielsweise drahtgebunden oder auch drahtlos ausgelegt sein. Über diese Schnittstelle können beispielsweise Daten von dem zweiten Modul 2 ausgelesen werden, insbesondere zu Wartungszwecken, wie beispielsweise dem Austausch eines zweiten Moduls 2. Es kann aber auch eine Aktualisierung der Daten oder Steuersoftware über diese zusätzliche Schnittstelle erfolgen, insbesondere bei einer drahtlosen Kommunikation. Es kann auch möglich sein, über diese zusätzliche Schnittstelle auch bei fehlender DC-Versorgungsspannung 5 (Leistungsübertragung) für das zweite Modul 2 insbesondere Daten aus diesem zweiten Modul 2 auszulesen. Vorzugsweise ist die zusätzliche Schnittstelle auf dem zweiten Modul 2 räumlich getrennt von der Kommunikationsschnittstelle 6 angeordnet.

### Adaptive Ansteuerung des getakteten DC-DC-Wandlers (zweites Untermodul B) als energieübertragender Konverter

Wie oben bereits erläutert, weist das erste Modul 1 ein zweites Untermodul B auf, das die Funktion eines isolierenden Wandlers aufweist. Dieses zweite Untermodul B wird ausgehend beispielsweise von dem PFC des ersten Untermoduls A mit einer DC-Spannung (Busspannung) V_{Bus} versorgt.

Dieses zweiten Untermodul B weist wie im Folgenden im Detail erläutert einen getakteten isolierenden DC/DC-Wandler auf. Dieser soll nunmehr unter Bezugnahme auf Figur 2 erläutert werden.

In Figur 2 ist gezeigt, dass die Ausgangsspannung des Moduls A (bspw. PFCs), nämlich die Busspannung V_{Bus} einem Wechselrichter 14 zugeführt ist, der beispielsweise als Halbbrücken-Wechselrichter mit zwei Schaltern S1, S2 ausgebildet sein kann. Die Ansteuersignale für die Taktung der Schalter S1, S2 kann von der Steuereinheit G des ersten Moduls 1 erzeugt werden.

An den Mittenpunkt 29 des Wechselrichters 14 schließt sich im dargestellten Beispiel ein Resonanzkreis 15, hier als Serienresonanzkreis ausgebildet, nämlich ein LLC-Resonanzkreis, an. Im dargestellten Beispiel weist dieser Resonanzkreis 15 eine erste Induktivität 16, einen Koppelkondensator 17, einen Transformator 19 auf. An den Resonanzkreis 15 schließt sich ein Transformator 19 an mit einer Primärwicklung 20 und einer Sekundärwicklung 21. Die Induktivität 16 kann in den Transformator 19 integriert sein, wie später noch erläutert wird.

Hinsichtlich des dargestellten Beispiels ist anzumerken, dass der Transformator 19 als Ersatzschaltbild dargestellt ist. Die Primärwicklung 20 weist dabei in der Realität eine Induktivität 18 als integrierte Streuinduktivität auf und daneben eine Hauptinduktivität Lm, die den Magnetisierungsstrom führt.

Auf den Transformator 19 folgt ein Gleichrichter 22, an dessen Ausgang dann die heruntergesetzte DC-Versorgungsspannung 5 für das Lampenmanagementmodul 2 bereitgestellt wird. Der Transformator 19 sorgt also für die notwendige galvanische Entkopplung (Isolierung bzgl. der dem ersten Modul 1 zugeführten Eingangsspannung 9). Der Gleichrichter 22 kann wie an sich bekannt mit zwei oder vier Dioden ausgeführt werden, es kann indessen auch ein sogenannter 'synchronous rectifyer' (Synchrongleichrichter) vorgesehen sein, der zwei MOSFETs aufweist. Dieser Synchrongleichrichter führt wie an sich bekannt mit den beiden MOSFETs eine Vollbrückengleichrichtung aus. Der Gleichrichter 22 kann also sowohl als aktiver Gleichrichter (mit aktiv geschalteten Elementen wie beispielsweise MOSFET) oder als passiver Gleichrichter (mit passiv geschalteten Elementen wie Dioden) ausgeführt sein. Es kann eine Vollweggleichrichtung oder auch nur eine Einweggleichrichtung erfolgen. Auf den Gleichrichter folgt wie dargestellt ein Speicherkondensator 23. Es können am Ausgang auch weitere Filterelemente wie beispielsweise eine oder mehrere Induktivitäten und / oder auch zusätzliche Kondensatoren zur Glättung und Stabilisierung der Ausgangsspannung (DC Versorgungsspannung 5) vorhanden sein.

Hinsichtlich des als LLC-Resonanzkreis im dargestellten Beispiel ausgeführten Resonanzkreis 15 ist zu bemerken, dass die Induktivität 16 nicht als eigenes Bauteil vorliegen muss. Vielmehr kann die Streuung der Primärwicklung 20 eines realen Transformators diese Funktion übernehmen. Wenn somit die erste Induktivität 16 durch die Streuung der Primärwicklung 20 des Transformators 19 gebildet werden soll, wird gezielt darauf geachtet, dass keine perfekte Kopplung zwischen Primärwicklung 20 und Sekundärwicklung 21 des Transformators 19 vorliegt. Beispielsweise durch eine entsprechende Beabstandung der Primärwicklung 20 und der Sekundärwicklung 21 des Transformators 19 kann gezielt der notwendige Streueffekt erreicht werden, der funktionell die erste Induktivität 16 erzielen lässt. Indessen diese Streuwirkung nicht ausreichend sein sollte, wird eine tatsächlich auch als separates Bauteil vorliegende Induktivität 16 vorgesehen sein.

Die Kombination des Wechselrichters 14 mit dem Resonanzkreis 15 und dem folgenden Gleichrichter 22 bildet also einen durch den Transformator 19 isolierenden DC/DC-Wandler als Energie übertragenden Konverter. Dabei wird dieser DC/DC-Wandler durch eine stabilisierte Gleichspannung, der Busspannung VBus, gespeist und daraus wird am Ausgang des DC/DC-Wandlers eine DC-Versorgungsspannung 5 erzeugt, welche auch eine stabilisierte Gleichspannung darstellt, wobei diese gegenüber der Busspannung VBus durch den Transformator 19 isoliert ist und vorzugsweise ein anderes Potential aufweist.

Dieses Prinzip findet indessen genauso auch Anwendung auf andere Resonanzschaltungen, die beispielsweise Parallelresonanzschaltungen oder Kombinationen von Serien- und Parallelresonanzschaltungen.

Ein Vorteil der Verwendung einer Resonanzschaltung in einem derartigen Energie übertragenden DC/DC-Wandler liegt in der Ausnutzung einer Resonanzüberhöhung, um bei Nominallast oder hoher Belastung sekundärseitig ein möglichst verlustarmes Schalten der Schalter S1, S2 des Wechselrichters 14 zu ermöglichen. Dazu wird üblicherweise in der Nähe der Resonanzfrequenz des Resonanzkreises oder in der Nähe einer Harmonischen einer Resonanz des Ausgangskreises gearbeitet.

Die Ausgangsspannung (an dem Speicherkondensator 23) des übertragenden Konverters ist somit eine Funktion der Frequenz der Ansteuerung der Schalter S1, S2 des Wechselrichters 14, hier beispielhaft als Halbbrücken-Wechselrichter ausgeführt.

Wenn indessen an dem Ausgang der in Figur 2 dargestellten Schaltung eine geringe Last vorliegt (also das Modul 2 und die LED-Module F in Figur 1 eine geringe elektrische Last darstellen) wird die Ansteuerfrequenz der Schalter S1, S2 des Wechselrichters 14 weg von der Resonanzfrequenz erhöht. Mit der Veränderung der Ansteuerfrequenz ändert sich indessen nunmehr auch der Phasenwinkel zwischen der Spannung und dem AC-Strom an dem Mittenpunkt 29 des Wechselrichters 14.

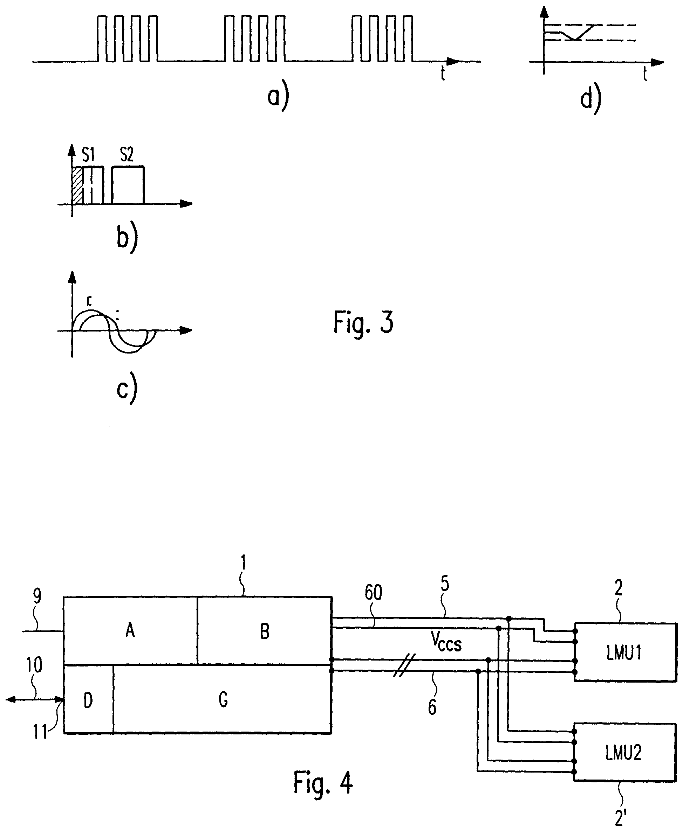

Bei sehr hoher Last (beispielsweise großer Strom durch die LEDs) und somit einem Betrieb nahe der Resonanz ist der Phasenwinkel zwischen Strom und Spannung am Mittenpunkt 29 sehr gering. Wie gesagt, bei geringer Last und somit einem Betrieb weiter entfernt von der Resonanz, wenn also beispielsweise eine geringe Leistung durch die LED-Strecke 8 fließt und somit keine oder nur eine geringe Leistung auf der Sekundärseite des Transformators 19 abgenommen wird, wird der Phasenwinkel sehr groß (siehe Figur 3c) und kann beispielsweise bis zu 50° betragen. In diesem Zustand fließen also weiterhin Ströme durch den Wechselrichter 14, die zu elektrischen Verlusten führen, ohne dass eine nennenswerte Leistung in die LED-Strecke 8 fließt.

Eine kombinierte Regelung kann vorgesehen sein. Die kombinierte Regelung besteht darin, dass für die zu regelnde Größe 'Ausgangsspannung des Energie übertragenden isolierten Konverters' zwei Steuergrößen verwendet werden, nämlich neben der Taktung des wenigstens einen Schalters S1, S2 des Wechselrichters 14 die Veränderung der Busspannung V_{Bus} des Wechselrichters 14. Die Veränderung der Busspannung V_{Bus} kann beispielsweise durch entsprechende Ansteuerung des PFCs des ersten Untermoduls A erreicht werden.

Zusätzlich oder alternativ kann nicht nur die Busspannung V_{Bus} durch entsprechende Ansteuerung des PFCs des ersten Untermoduls A angepasst werden. Abhängig vom Lastzustand oder auch Betriebszustand kann der PFC des ersten Untermoduls A entweder selbstständig oder durch eine entsprechende Ansteuerung, insbesondere durch die Steuereinheit G, den Betriebsmodus wechseln. Insbesondere kann der PFC des ersten Untermoduls A bei einem Betrieb mit hoher Last entweder im sogenannten Grenzbetrieb zwischen lückendem und nichtlückendem Strombetrieb (,Borderline Mode') oder im nichtlückendem Strombetrieb (,continuous conduction mode') arbeiten, und bei Betrieb einer geringen Last oder im Stand-By Modus im lückendem Strombetrieb (,discontinuous conduction mode') arbeiten. Es wäre aber auch beispielsweise möglich, dass der PFC des ersten Untermoduls A bei Betrieb einer geringen Last oder im Stand-By Modus in sogenannten Burst Modus (also eines Puls-Pause-Betriebsmodus oder auch Impulsmodus genannt), wechselt. Dabei wird weiterhin die Versorgungsspannung (Busspannung V_{Bus}) gleichgehalten, aber nach einer Anzahl von Ansteuerimpulsen für den oder die Schalter des PFC eine längere Pause eingelegt, bevor der nächste "Burst" (Impuls) als Ansteuersignal für die Schalter des PFC angelegt wird. Die Pause zwischen den Impulszügen ist dabei wesentlich länger, also beispielsweise mindestens das Doppelte einer Addition der Einschaltzeitdauern der Schalter des PFC.

Es liegt also ein kombiniertes Regelkonzept vor, bei dem abhängig von der Lastaufnahme von einem Rückführsignal, das diese Lastaufnahme direkt oder indirekt wiedergibt, die genannten Steuergrößen kombiniert werden.

Eine weitere Möglichkeit ist es, in der Steuergröße "Frequenz der Schalter" bei gleichbleibender Frequenz die Totzeit (siehe Figur 3b) zwischen den Einschaltzeitdauern der Schalter S1, S2 des Wechselrichters 14 zu verlängern. Es kann also beispielsweise die Frequenzerhöhung der Leistungsbereitstellung zu einer maximal zulässigen Ansteuerfrequenz der Schalter S1, S2 des Wechselrichters 14 erhöht werden. Bei dieser maximal zulässigen Frequenz (entsprechend dem maximal zulässigen Phasenwinkel) wird dann die zweite Steuergröße zur weiteren Verringerung der Leistungsaufnahme verwendet, nämlich die Verlängerung der Totzeit zwischen den Einschaltzeitdauern der Schalter S1, S2.

Eine weitere Möglichkeit ist es, bei gleichbleibender Frequenz das Verhältnis von Einschaltzeitdauer zu Ausschaltzeitdauer der Schalter S1, S2 des Wechselrichters 14 zu verändern (also das Einschaltverhältnis). Vorzugsweise wird das Einschaltverhältnis mit Abnahme der Last verringert. Es kann also beispielsweise die Frequenzverringerung der Leistungsbereitstellung zu einer maximal zulässigen Ansteuerfrequenz der Schalter S1, S2 des Wechselrichters 14 erhöht werden. Bei dieser maximal zulässigen Frequenz (entsprechend dem maximal zulässigen Phasenwinkel) wird dann die zweite Steuergröße zur weiteren Verringerung der Leistungsaufnahme verwendet, nämlich die Veränderung der Einschaltzeitdauer der Schalter S1, S2 (bei gleichbleibender Frequenz).

Eine weitere Möglichkeit, eine weitere Steuergröße einzuführen, ist die Einführung eines sogenannten Burst Modes (also eines Puls-Pause-Betriebsmodus oder auch Impulsmodus genannt), siehe Figur 3a. Dabei wird weiterhin die Versorgungsspannung (Busspannung V_{Bus}) gleichgehalten, aber zumindest dann, wenn die Ansteuerfrequenz einen maximal zulässigen Wert erhalten wird, zur Verringerung der Lastbereitstellung die Frequenz nicht mehr weiter erhöht. Vielmehr werden nach einer Anzahl von Ansteuerimpulsen für beide Schalter S1, S2 (die Anzahl ist dabei größer als 1) eine längere Pause eingelegt, bevor der nächste "Burst" (Impuls) als Ansteuersignal für die Schalter S1, S2 angelegt wird. Die Pause zwischen den Impulszügen ist dabei wesentlich länger, also beispielsweise mindestens das Doppelte einer Addition der Einschaltzeitdauern der Schalter S1, S2.

Bei diesem Burst-Modus, bei dem die Steuergröße also die Länge der aus Totzeit zwischen zwei Impulszügen ist, wird es natürlich zu einem gewissen "Rippel" der Spannung an der Ausgangsseite, also am Speicherkondensator 23 kommen, wie in Figur 3d dargestellt. Erfindungsgemäß kann nunmehr vorgesehen sein, dass ein zulässiger Rippel-Korridor um einen Sollwert für die Spannung an dem Speicherkondensator 23 vorgegeben ist. Wenn die Spannung nach einer gewissen Anzahl an Impulsen eines Impulszuges (Bursts) den oberen Grenzwert des Rippel-Korridors erreicht hat, wird eine längere Impulspause eingelegt. In dieser Impulspause des Burst-Betriebsmodus sinkt die Spannung am Speicherkondensator 23 dann ab, bis sie den unteren Grenzwert des vorgegebenen Rippel-Korridors erreicht. Beim Erreichen des unteren Grenzwerts wird der nächste Impulszug angelegt, so dass sich dieses Ansteigen und Abfallen der Spannung (Rippel) am Speicherkondensator 23 zyklisch wiederholen wird. Es liegt also eine hysteretische Regelung vor. Die Burst Pakete (also der Zeitraum, in dem kurzzeitig getaktet wird) können dabei relativ kurz gehalten werden. Auf diese Weise kann Störungen und auch hörbaren Geräuschen entgegengewirkt werden. Alternativ können die Bursts auch mit einer veränderlichen Wiederholrate und / oder Dauer der Pakete erzeugt werden. Wenn das Untermodul C als getaktete Konstantstromquelle ausgeführt ist, dann kann der in dem Burst-Betriebsmodus auftretende Rippel der DC-Versorgungsspannung 5 durch eine entsprechende Ansteuerung der getaktete Konstantstromquelle kompensiert werden. Dies kann beispielsweise mittels eine Regelschleife für eine Ausregelung des LED-Stromes oder einen Betrieb der getakteten Konstantstromquelle in Abhängigkeit von der Amplitude der DC-Versorgungsspannung 5 erfolgen.

Wie bereits erwähnt erfolgt die adaptive Einstellung des Betriebsmodus (Steuergröße) des DC-DC-Wandlers abhängig von der Last auf der Sekundärseite, d.h. der Last, die durch die Spannung an dem Speicherkondensator 23 versorgt ist. Dazu kann ein die Last wiedergebendes Signal an die Ansteuerschaltung (IC in der Steuerschaltung G in Fig. 1) zurückgeführt werden, oder ein extern zugeführtes Dimmsignal verwendet werden. Die Leistungsaufnahme der Last kann dabei sekundärseitig (bezüglich des Transformators 19), aber auch auf der Primärseite des Transformators 19 gemessen werden. Beispielsweise kann als ein die Leistungsaufnahme der Last wiedergebendes Signal der Spannungsabfall über einen Messwiderstand 24 in Serie zu den Schaltern S1, S2 oder zumindest in Serie zu einem der Schalter S1, S2 des Wechselrichters 14 verwendet werden. Die eigentliche Leistungsaufnahme stellt dann im Wesentlichen ein Produkt der (gemessenen oder zumindest durch den PFC konstant gehaltenen) Versorgungsspannung (Busspannung V_{Bus}) mit diesem über den Spannungsabfall am Messwiderstand 24 gemessenen Strom durch den Wechselrichter 14 dar.

In dem obigen Beispiel wurde eine primärseitige Erfassung für ein die Leistungsaufnahme der Last wiedergebendes Signal gegeben. Natürlich können indessen auch sekundärseitige Rückführsignale, beispielsweise der Strom durch die und/oder die Spannung über der LED-Strecke 8, etc. als Rückführsignal verwendet werden, welches Rückführsignal die Leistungsaufnahme der Last wiedergibt.

Ein bevorzugter Ablauf der adaptiven kombinierten Regelung ist es dabei, die Verringerung für die Last dadurch durchzuführen, dass kontinuierlich die Ansteuerfrequenz der Schalter S1, S2 des Wechselrichters 14 erhöht wird, bis einen fest vorgegebene Maximalfrequenz erreicht wird. Wenn diese Maximalfrequenz erreicht ist, aber die zugeführte Leistung für die Last weiterverringert werden soll, wird dann adaptiv die Ansteuerschaltung einer der oben angeführten weiteren Betriebsarten wählen. Wenn beispielsweise bei Erreichen der zulässigen Maximalfrequenz die Busspannung V_{Bus} abgesenkt wird, kann dann die zulässige Maximalfrequenz der Ansteuerung der Schalter S1, S2 beibehalten werden, oder auch wenn dies durch Absenken der Busspannung V_{Bus} oder der anderen gewählten Steuergröße überkompensiert werden kann, die Ansteuerfrequenz sogar wieder auf einen niedrigeren Sollwertbereich abgesenkt werden.

Es folgt also ein Umschalten der Steuergröße für die Leistungszufuhr für die Sekundärseite beim Erreichen der Maximalfrequenz. Beispiele für eine weitere Steuergröße die dann ergänzend oder alternativ zu der Veränderung der Ansteuerfrequenz verwendet wird, wurde bereits die Veränderung (Absenkung) der Versorgungsspannung (Busspannung V_{BUS}), die Veränderung der Totzeit zwischen den Einschaltdauern der beiden Schalter S1, S2 oder die Verlängerung der Totzeit zwischen zwei Impulszügen im Burst-Modus genannt. Dabei kann auch eine Kombination von weiteren Steuergrößen genutzt werden, beispielsweise können sowohl das Einschaltverhältnis als auch die Totzeit geändert werden.

Es liegt somit grundsätzlich eine alternative Ansteuerung eines getakteten DC-DC Wandlers als Untermodul B vor, wobei sich die Adaptivität auf die Adaption der Steuergrößen abhängig von der Lastaufnahme der Sekundärseite des DC-DC-Wandlers bezieht. Das Untermodul B kann auch durch einen Wechselrichter mit einem Schalter gebildet werden, beispielsweise als Class-E Konverter oder quasi-resonanter Flyback-Konverter, wobei jeweils eine Gleichrichtung und Glättung am Ausgang erfolgt.

Wie in Fig. 1 und 2 bereits dargestellt kann an dem Speicherkondensator 23 ein zweites Modul 2 mit einer weiteren Konverterstufe (weiteres Untermodul C als Konstantstromquelle) angeschlossen sein, wobei das zweite Modul 2 (Lampenmanagementmodul) eine Steuereinheit E, z.B. als integrierte Schaltung, aufweisen kann. Das weitere Untermodul C kann sowohl als getaktete Konstantstromquelle (also beispielsweise als Tiefsetzsteller, d.h. Buck-Konverter) oder als Linearregler (realisiert mit Transistoren oder integrierten Schaltkreisen) ausgeführt sein. Es können aber auch direkt LEDs an den Ausgang des zweiten Untermoduls B angeschlossen werden.

Externe Dimmbefehle können, wie in Fig. 1 dargestellt, der Steuereinheit G des ersten Moduls 1, aber auch der Steuereinheit E des zweiten Moduls 2 zugeführt werden. Im zweiten Fall kann die Steuereinheit E des zweiten Moduls 2 die Dimminformation an die Steuereinheit G des ersten Moduls 1 übertragen, so dass für die Leistungsaufnahme kein Messsignal vorliegen muss, sondern vielmehr aus einer der Steuereinheit G für den DC-DC-Wandler im zweiten Modul B vorliegende Dimminformation verwendet werden kann.

Die adaptive Einstellung des zweiten Untermoduls B kann aber auch aufgrund eines von extern zugeführten Dimmbefehls oder auch aufgrund einer Rückmeldung durch das zweite Modul 2 erfolgen.

Die Ansteuerung der Schalter S1, S2 des Wechselrichter 14 kann über die Steuereinheit G über eine Treiberstufe erfolgen. Vorzugsweise ist zumindest die Treiberstufe für die auf hohem Potential liegenden Schalter des Wechselrichters für eine Ansteuerung auf hohem Spannungspotential ausgelegt. Beispielsweise handelt es sich bei dieser Treiberstufe um eine Pegelversatzstufe, eine Treiberstufe mit Transformator oder eine Treiberstufe mit Luftspule. Diese Treiberstufe kann auch in die Steuereinheit G integriert sein.

Die Steuereinheit G kann weiterhin Mittel zur Vermeidung von Fehlern beim Betrieb des Wechselrichters aufweisen. So können beispielsweise Überstromabschaltungen oder Strombegrenzungen für den Strom durch zumindest einen Schalter vorhanden sein. Es kann auch die Totzeit für die Ansteuerung des Wechselrichters einstellbar sein (d.h. die Zeitspanne zwischen dem Öffnen des einen Schalters (bspw. S1) und dem Schließen des zweiten Schalter (S2)). Vorzugsweise ist diese Totzeit auch adaptiv einstellbar, beispielsweise abhängig von der Mittelpunktspannung am Wechselrichter 14 oder vom Strom oder der Spannung über einem Schalter des Wechselrichters 14.

Die Steuereinheit G kann auch die Busspannung V_{Bus} überwachen, insbesondere auch den Rippel der Busspannung V_{Bus} (d.h. die Schwankungen innerhalb einer bestimmten Zeit). Abhängig von der Auswertung des Rippels der Busspannung V_{Bus} kann die Steuereinheit G die Ansteuerung des Wechselrichters 14 beeinflussen. Insbesondere kann sie die Frequenz des Wechselrichters 14 an die Auswertung des Rippels der Busspannung V_{Bus} anpassen, um den Rippel am Ausgang des Wechselrichter 14 zu reduzieren. Vorzugsweise wird dabei die Frequenz des Wechselrichters bei steigender Busspannung V_{Bus} erhöht, und bei sinkender Busspannung V_{Bus} abgesenkt. Auf diese Weise kann erreicht werden, dass dieser Rippel auf der Busspannung V_{Bus} weniger stark an den Ausgang des Wechselrichters 14 weitergeführt wird.

### Datenkommunikation zwischen dem ersten Modul 1 und dem zweiten Modul 2 (Lampenmanagement-Modul):

Bezugnehmend auf Figur 4 soll nunmehr die Kommunikationsschnittstelle 6 (interner Bus) zwischen dem ersten Modul 1 und einem oder mehreren zweiten Module 2, 2' als Lampenmanagement-Module erläutert werden.

Aufgrund der Tatsache, dass über den internen Bus mehrere zweiten Module 2, 2' nicht nur mit Leistung (Übertragungsstrecke 5), sondern auch unidirektionalen oder bidirektionalen mit Datenaustausch in Verbindung stehen (Kommunikationsschnittstelle 6), kann das erste Modul 1 auch als Zentraleinheit oder auch Master bezeichnet werden. Die zweiten Module 2, 2' können als Slaves bezeichnet werden.

Wie bereits eingangs erwähnt liegt hinsichtlich des internen Busses für die Kommunikationsschnittstelle 6 eine vorzugsweise standardisierte Kommunikation vor, die zusätzlich zu der DC-Versorgungsspannung 5 vorgesehen ist. Unter "standardisiert" ist zu verstehen, dass das Protokoll der Kommunikationsschnittstelle 6 unabhängig ist von dem Protokoll der externen Kommunikation über die Datenschnittstelle 11 des ersten Moduls 1.

Vorzugsweise ist die Kommunikation über die Kommunikationsschnittstelle 6 bidirektional und kann beispielsweise gemäß einem SPI-Protokoll (Serial Peripheral Interface) erfolgen.

Auch die Datenkommunikation über die Kommunikationsschnittstelle 6 (internen Bus) erfolgt vorzugsweise potentialgetrennt, beispielsweise unter Verwendung von Optokopplern oder Transformatoren. Beispielsweise kann bei der Verwendung von einem oder mehreren Transformatoren für eine potentialgetrennte Kommunikationsschnittstelle 6 der Transformator hochfrequent getaktet werden und somit Daten über Pakete hochfrequenter Takte übertragen. Durch den Einsatz einer potentialgetrennten Kommunikationsschnittstelle 6 kann der Benutzer und auch die angeschlossenen weiteren Module vor möglichen Überspannungen, beispielsweise aufgrund eines Defekts in einem der Module, geschützt werden. Auch wird durch die potentialgetrennte Ausführung der Kommunikationsschnittstelle 6 die Robustheit des Beleuchtungssystems erhöht, beispielsweise wird die Abtrennung und der Austausch eines zweiten Moduls 2 erleichtert.

Eine grundsätzliche Funktion der Kommunikationsschnittstelle 6 kann die Weitergabe von Dimmbefehlen von dem ersten Modul 1 an die zweiten Module 2 sein, welche beispielsweise über den externen Bus 10 empfangen worden sind. Dabei können auch aus den über den externen Bus 10 empfangenen Dimmbefehlen neue Steuerinformationen oder Befehle für die zweiten Module 2 abgeleitet werden.

Ein Anwendungsfall für die bidirektionale Datenkommunikation über den internen Bus (Kommunikationsschnittstelle 6) ist es, dass Daten, die in einem der zweiten Module 2, 2' abgespeichert sind, über den internen Bus (Kommunikationsschnittstelle 6) zu der Steuereinheit G des ersten Moduls 1 übertragen werden können. Dies ist insofern von Vorteil, als das die Datenspeicherung in den zweiten Modulen 2, 2' näher an der LED-Strecke 8 liegt, so dass dort eine höhere Erwärmung stattfindet, die zu einem gegebenenfalls nicht wieder herstellbaren Datenverlust der Speicherung im Bereich der Lampenmanagementmodule (zweiten Modulen 2, 2') folgen kann. Auch durch die Übertragung über die Kommunikationsschnittstelle 6 zu dem ersten Modul 1 können diese Daten dann dem ersten Modul 1 im Sinne eines Backups nochmal gespeichert werden.

Beispiele für diese über die Kommunikationsschnittstelle 6 übertragenen Daten sind Betriebsdaten für die LED-Strecke 8, wie beispielsweise Temperaturen, Betriebszeitdauern, elektrische Parameter etc.

Nachdem die Daten von einem der Lampenmanagementmodule (zweite Module 2, 2', ..., 2^{n'}) zum ersten Modul 1 übertragen sind, können sie natürlich gegebenenfalls weiter verarbeitet auch über den externen an der Datenschnittstelle 11 angeschlossenen Bus 10 ausgelesen werden. Somit kann über den externen Bus 10 eine weitere Analyse der Betriebsdaten, beispielsweise eine Ausfalls-Analyse, eine Alterungskompensation abhängig von der übertragenen Betriebszeitdauer der LED-Strecke 8, etc. erfolgen.

Der standardisierte Ansatz für den internen Bus (Kommunikationsschnittstelle 6) hat auch den Vorteil, dass Lampenmanagement-Module (zweite Module 2, 2') in einfacher Weise ausgetauscht werden können. Die Zufuhr in einer auszutauschenden Lampenmanagement-Modul (zweite Module 2, 2') abgespeicherte Daten können wir oben bereits beschrieben nach Übertragung über die Kommunikationsschnittstelle 6 in dem ersten Modul 1 abgespeichert werden. Wenn dann das Lampenmanagement-Modul ausgetauscht ist, können die in dem ersten Modul 1 abgelegten Betriebsdaten wieder zu dem neu eingesetzten Lampenmanagement-Modul übertragen werden, so dass dieses dann identisch zu dem ersetzten Lampenmanagement-Modul konfiguriert ist.

Weitere Beispiele für derartige Betriebsdaten sind Farbkoordinaten, Farbort oder andere das Spektrum der LED-Strecke 8 beeinflussende Parameter.

Über die Kommunikationsschnittstelle 6 können auch Lastwechsel oder besondere Betriebszustände oder vergleichbare Ereignisse von einem zweiten Modul 2, 2' über die Kommunikationsschnittstelle 6 an das erste Modul 1 übertragen werden. Es kann damit eine Vorabsignalisierung von zu erwartenden Lastwechseln oder Betriebszustandsänderungen erfolgen, so dass die Steuereinheit G im ersten Modul 1 die Ansteuerung des PFCs im ersten Untermodul A und/oder die Ansteuerung des zweiten Untermodul B entsprechend adaptiv anpasst. Beispielsweise kann abhängig von einem über die Kommunikationsschnittstelle 6 von einem zweiten Modul 2, 2' übertragenen zu erwartenden Lastwechsel oder Betriebszustandswechsel die Steuereinheit G des ersten Moduls 1 Parameter für den in Figur 2 dargestellten Wechselrichter 14 und/oder Reglereigenschaften für die Ansteuerung des PFCs im ersten Untermodul A anpassen.

Natürlich kann auch eine Art Vorabinformation umgekehrt, d.h. von dem ersten Modul 1 hin zu den zweiten Modulen 2, 2' erfolgen. Wenn beispielsweise das erste Modul 1 über den externen Bus 10 und die Datenschnittstelle 11 bzw. die Schnittstellenschaltung D Dimmbefehle erhält, die einen Lastwechsel der LED-Strecke 8 bedeuten, können derartige Informationen bzw. ein den Betriebszustandswechsel wiedergebendes Signal über den Bus bzw. die Kommunikationsschnittstelle 6 an die zweiten Modulen 2, 2' übertragen werden, so dass auch die in den zweiten Modulen 2, 2' vorgesehene Steuereinheit E Steuerparameter, beispielsweise für die Konstantstromquelle (weiteres Untermodul C) entsprechend dem zu erwartenden Lastwechsel anpassen können.

Das in Figur 4 gezeigte Master/Slave-System hat auch Vorteile hinsichtlich der Verringerung elektrischer Verluste, da eine Art Standby-Betrieb vorgesehen sein kann, in dem eines, mehrere, oder auch alle der an einem ersten Modul 1 angeschlossenen zweiten Module 2, 2' abgeschaltet werden, während zumindest die Steuereinheit G des ersten Moduls 1 weiterhin den extern angeschlossenen Bus 10 über die Datenschnittstelle 11 bzw. die Schnittstellenschaltung D überwachen kann.

Extern ist das in der Figur 4 dargestellte Master/Slave-System vorzugsweise nur über den an der Datenschnittstelle 11 bzw. die Schnittstellenschaltung D des ersten Moduls 1 angeschlossenen Bus 10 ansprechbar. Indessen kann es eine interne hierarchische Aufteilung, ggf. inklusive Adressierung über den internen Bus (Kommunikationsschnittstelle 6) hin zu den mehreren anschließbaren zweiten Modulen 2, 2' geben.

Somit kann einerseits eine adressierte Kommunikation hin zu den zweiten Modulen 2, 2' erfolgen. Alternativ oder zusätzlich kann indessen auch ein Broadcast-Modus vorgesehen sein, d.h. eine nicht andressierte Datenübermittlung von dem ersten Modul 1 an alle angeschlossenen zweiten Module 2, 2'. In diesem Broadcast-Modus wird ein von dem ersten Modul 1 über den internen Bus (Kommunikationsschnittstelle 6) ausgesandter Befehl von allen zweiten Modulen 2, 2' empfangen und ausgewertet.

Im Notlichtfall kann vorgesehen sein, dass sobald durch das erste Modul 1 eine Notlichterkennung erfolgt ist, über die Kommunikationsschnittstelle 6 ein entsprechender Steuerbefehl übertragen wird und die zweiten Module 2, 2' entsprechend ihren Betreib anpassen. Beispielsweise kann zum Erreichen einer geringeren Grundhelligkeit und somit eines geringeren Energieverbrauchs für den Notlichtbetrieb nur eines bzw. eine Untergruppe der mehreren von dem ersten Modul 1 versorgten zweiten Module 2 betrieben werden.

Die Kommunikationsschnittstelle 6 kann auch zur Übertragung der Niedervoltversorgung genutzt werden (es erfolgt dann sowohl eine Datenkommunikation als auch eine Energieübertragung, beispielsweise über die sekundärseitige DC-Niedervoltspannungsversorgung V_{CCs}). Beispielsweise kann eine sogenannte Active Low Datenübertragung genutzt werden, wobei im Ruhezustand ein Pegel von einigen Volt, beispielsweise 12V, anliegt. Bei einer Kopplung beispielsweise über Transformatoren könnte somit auch bei einer galvanischen Trennung der Kommunikationsschnittstelle 6 trotzdem auch Energie übertragen werden.

### Niedervoltversorgung

Unter Bezugnahme auf Fig. 5 soll nunmehr eine Niedervoltversorgung in dem in Fig. 1 gezeigten modularen System erläutert werden.

Es wird im Weiteren dann erläutert werden, wie durch eine derartige Niedervoltversorgung beispielsweise auch durch ein zweites Modul 2 (Lampenmanagementmodul) aktive Kühlmittel 40, wie beispielsweise ein Ventilator, eine Pumpe, ein Peltier-Element etc. versorgt werden können. Derartiges aktives Kühlmittel 40 wird also nicht direkt ausgehend von dem ersten Modul 1, sondern vorzugsweise individuell über jedes angeschlossene Lampenmanagementmodul 2 mit elektrischer Leistung versorgt.

In der Figur 5 ist wiederum gezeigt, wie die Busspannung V_{Bus}, beispielsweise durch den PFC-Modul des ersten Moduls 1 erzeugt, einem Wechselrichter zugeführt wird. Im dargestellten Beispiel weist der Wechselrichter nur einen Schalter S1 im Gegensatz zu dem Wechselrichter 14 als Halbbrückenwechselrichter von Fig. 2 auf. Im dargestellten Beispiel ist folgend auf den Wechselrichter mit dem Schalter S1 die Primärwicklung 20 des Transformators 19 gezeigt. Wiederum wird ausgehend von der Sekundärwicklung 21 des Transformators 19 ein Gleichrichter 22 versorgt, bei dem die Ausgangsspannung des Gleichrichters 22 direkt oder indirekt der LED-Strecke 8 zugeführt ist. Somit stellen die Primär- und Sekundärwicklungen 20, 21 den bereits weiter oben erläuterten Pfad zur elektrischen Leistungsversorgung (DC-Versorgungsspannung 5) der LED-Strecke des LED-Modul F dar.

Bei dem Wechselrichter gemäß Fig. 5 kann es sich um einen Konverter mit einem oder mehreren Schaltern wie beispielsweise einen Halbbrückenwechselrichter (siehe Beispiel Fig.2) oder isolierten Sperrwandler (Flyback-Konverter) handeln. Vorzugsweise arbeitet dieser resonant oder quasi-resonant.

Zusätzlich zu diesem Übertragungspfad gibt es nunmehr erfindungsgemäß einen weiteren Niedervolt-Übertragungspfad. Dieser weist eine weitere Sekundärwicklung 30 auf, die also ebenfalls magnetisch mit der Primärwicklung 20 gekoppelt ist. Über eine Gleichrichterschaltung mit einer Diode 31 und einem Kondensator 32 wird durch entsprechend Wahl der Wicklungsverhältnisse der Wicklungen 20, 30 eine sekundärseitige DC-Niedervoltspannungsversorgung V_{CCS} erzeugt. In der Figur ebenfalls dargestellt, ist diese sekundärseitige DC-Niedervoltspannungsversorgung V_{CCS} ebenfalls dem zweiten Modul 2 zugeführt. Das zweite Modul 2 kann dann diese Niedervoltspannungsversorgung in unterschiedlicher Weise verwenden, nämlich: zur Versorgung der integrierten Steuereinheit E im Lampenmanagementmodul (zweiten Modul 2), zur selektiv gesteuerten Ansteuerung von aktiven Kühlmitteln 40, und/oder zur aktiven Versorgung weiterer angeschlossener Aktoren oder Sensoren, die schematisch mit dem Bezugszeichen 41 bezeichnet sind.

Wie in der Figur 5 weiterhin dargestellt, ist eine noch weitere (und somit dritte) Sekundärwicklung 33 magnetisch mit der Primärwicklung 20 des Transformators 19 gekoppelt. Diese Sekundärwicklung 33 speist einen Gleichrichter mit einer Diode 42 und einem Kondensator 43, dient zur Erzeugung einer primärseitigen Niedervoltspannungsversorgung V_{CCP}. Unter primärseitig ist dabei zu verstehen, dass diese Niedervoltspannungsversorgung V_{CCP} im ersten Modul 1 verwendet wird (also auf der Netzseite, d.h. vor einer Potentialtrennung), beispielsweise als Niedervoltspannungsversorgung für die interne integrierte Steuereinheit G des ersten Moduls 1.

Während die Leistungsübertragung über die Strecke der DC-Versorgungsspannung 5 zur Speisung des LED-Modul F beispielsweise 48 Volt DC betragen kann, ist der Spannungspegel der Niedervoltspannungsversorgungen V_{CCS} und V_{CCP} deutlich geringer, und beispielsweise in einem Bereich von 2 bis 12 Volt DC.

Es können also zwei unterschiedliche DC-Spannungsversorgungen von dem ersten Modul 1 an jedes angeschlossene zweite Modul 2 zugeführt werden.

Das Beleuchtungssystem kann auch derart betrieben werden, dass das zweite Untermodul B die Speisung der DC-Versorgungsspannung 5 deaktiviert und nur die Niedervoltversorgung (bspw. die sekundärseitige DC-Niedervoltspannungsversorgung V_{CCs}) aufrecht erhält. Dies kann beispielsweise in einem Fehlerbetrieb oder Ruhemodus erfolgen. Auf diese Weise können beispielsweise vorhandene Sensoren wie der Sensor 41 weiterhin ausgewertet werden und es kann beispielsweise auch die Kommunikationsschnittstelle 6 aktiviert bleiben. Vorzugsweise wird dafür weiterhin die Steuereinheit E zumindest in einem reduzierten Betriebsmodus weiterbetrieben (beispielsweise mit reduzierter Funktionalität).

Der Sensor 41, der funktionell dem zweiten Modul 2 zugeordnet ist, kann ein Helligkeitssensor, beispielsweise eine Photodiode mit optionaler Auswertelogik, oder ein Farbsensor sein.

Der Sensor 41, der funktionell dem zweiten Modul 2 zugeordnet ist, kann natürlich auch ein Temperatursensor sein, dessen Ausgangssignal beispielsweise zur Ermittlung der Temperatur der LED-Junction der LEDs des LED-Moduls F verwendet werden kann. Andererseits kann dieser Sensor 41 als Temperatursensor auch zur Regelung des Betriebs der aktiven Kühlung, beispielsweise des Kühlmittels 40 (vorzugsweise als Ventilator) verwendet werden.

Alternativ oder zusätzlich kann natürlich auch eine Temperaturermittlung der Temperatur der LED-Junction durch Auswertung der Kennlinie und Messung elektrischer Parameter der LED-Strecke des LED-Moduls F erfolgen.

Dadurch, dass die primärseitige Niedervoltspannungsversorgung V_{CCP} über eine für die Erzeugung der sekundärseitigen Niedervoltspannungsversorgung V_{CCS} unabhängige Wicklung 33 erfolgt, liegt somit eine Potentialtrennung vor.

Wie eine Zusammenschau der Figur 2 und Figur 5 erkennen lässt kann ein Wechselrichter mit einem Schalter S1 oder mehreren Schaltern S1, S2 vorliegen. Als weitere Beispiele neben dem in Figur 2 dargestellten Wechselrichters 14 als Halbbrückenwechselrichter sind zu nennen der Flyback-Konverter, ein SEPIC oder ein Vorwärtswandler. Es liegt auf jeden Fall also ein isolierter Wandler vor.

Für die Anlaufphase der Steuereinheit G des ersten Moduls 1 kann in an sich bekannter Weise mit der Eingangsspannung 9 ein Anlaufwiderstand R1 gespeist werden, der die Steuereinheit G mit Energie versorgt, bis die primärseitige Niedervoltspannungsversorgung V_{CCP} erwartungsgemäß erzeugt wird, da die Erzeugung der primärseitigen und auch der sekundärseitigen Niedervoltspannungsversorgungen V_{CCP} und V_{CCS} eine Taktung des zweiten Untermoduls B (DC/DC-Wandler) voraussetzt. Wenn die eigentliche Niedervoltspannungsversorgung dann ausgehend von dem isolierten Wandler (zweiten Untermoduls B) angefahren ist, kann der ohmsche Anlaufwiderstand R1 wieder mit dem Schalter S3 abgeschaltet werden, um somit elektrische Verluste über den Anlaufwiderstand R1 im regulären Betrieb der Schaltung zu vermeiden.

Vorzugsweise werden die Niedervoltspannungsversorgungen V_{CCS}, V_{CCP} mittels eine Vollbrücken-Gleichrichters gewonnen. Es kann aber auch nur eine einzige Diode zur Gleichrichtung verwendet werden. Die Niedervoltspannungsversorgung V_{CCS} kann in dem zweiten Modul 2 einer Steuereinheit E zugeführt sein und/oder für die Versorgung eines dem zweiten Modul 2 zugeordneten aktives Kühlmittels 40 weitergeschleift sein.

Die sekundäre DC-Niedervoltspannungsversorgung V_{CCS} für das zweite Modul 2 kann zur Spannungsstabilisierung wie in der Figur 5 gezeigt nochmals eine Kühlmittelansteuerung 50, beispielsweise einen DC/DC-Konverter oder auch einen Linearregler zugeführt werden, wobei dann die stabilisierte Ausgangsspannung dieses DC/DC-Konverters oder Linearreglers 50 die Steuereinheit E des zweiten Moduls 2 speist.

Die Kühlmittelansteuerung 50 kann abhängig von einem über die Kommunikationsschnittstelle 6 zugeführten Dimmbefehl (Dimminformation), von einer Vorgabe durch die Steuereinheit E oder auch abhängig von der direkt (über einen Temperatursensor) oder indirekt (beispielsweise eine Temperaturermittlung der Temperatur der LED-Junction) ermittelten Temperatur am LED-Modul F die Ansteuerung des aktiven Kühlmittels 40 steuern oder auch regeln.

Somit können vorzugsweise aktive Kühlmittel 40 durch eine derartige Niedervoltversorgung über eine Kühlmittelansteuerung 50, welche jeweils auf dem zweiten Modul 2 angeordnet ist, versorgt werden. In diesem Fall werden derartige aktive Kühlmittel 40 wird also nicht direkt ausgehend von dem ersten Modul 1, sondern vorzugsweise individuell über jedes angeschlossene Lampenmanagementmodul 2 mit elektrischer Leistung versorgt. Dies bietet den Vorteil, dass bei einem Betrieb mehrerer zweiter Module 2, 2'... über ein erstes Modul 1 für jedes zweite Modul eine unabhängige Ansteuerung der aktiven Kühlmittel 40 möglich ist. Dies kann insbesondere vorteilhaft sein, wenn die Helligkeit der einzelnen LED-Module F unterschiedlich ist oder auch aufgrund der räumlichen Anordnung der einzelnen LED-Module F eine unterschiedlich starke Erwärmung der LED-Module F erfolgt.

Wie bereits erwähnt, kann die Niedervoltversorgung auch als Kommunikationsschnittstelle 6 dienen, d.h. es können zusätzlich zu der übertragenen Energie auch Daten übertragen werden.

### Speicherabgleich Kommunikation zwischen Lampenmanagement-Modul und LED-Modul

Wie in Figur 1 dargestellt, kann das LED-Modul F in einem ihm zugeordneten Speicher 4, beispielsweise mit einem EPROM, FLASH oder OTP versehen sein.

Durch das Bezugszeichen 3 in Figur 1 schematisch dargestellt, kann die Steuereinheit E, beispielsweise eine integrierte Schaltung oder ein Mikrocontroller des zweiten Moduls 2 auf den Speicher 4 des LED-Moduls F zugreifen, um somit beispielsweise dessen Speicherinhalt selektiv auszulesen. Die von diesem Speicher 4 ausgelesenen Daten können dann beispielsweise auch von der Steuereinheit E des zweiten Moduls 2 über die Kommunikationsschnittstelle 6 (interner Bus) an das erste Modul 1 gesandt werden. Die Daten in dem Speicher 4 können beispielsweise die Laufzeit, Fertigungsdaten, eine Fehlerlogging, Maximalwert, Minimalwerte (z.B. für Strom und Spannung) und / oder die Temperatur sein.

Dies hat den Vorteil, dass eine etwaige Beeinträchtigung des Speicherinhalts des Speichers 4 des LED-Moduls F, beispielsweise durch die Temperaturbeeinträchtigung aufgrund der großen physischen Nähe zu der LED-Strecke 8, verringert wird. Somit kann die Steuereinheit E des zweiten Moduls 2 diese Daten auslesen und in einem ihm zugeordneten Speicher im Sinne eines Backups ablegen. Darüber hinaus kann die Steuereinheit E des zweiten Moduls 2 periodisch oder Betriebszustands- oder eventabhängig den Speicher 4 des LED-Moduls F auffrischen.

Es kann indessen auch möglich sein, dass das LED-Modul F selbst keinen Speicher aufweist. Die entsprechenden Daten, beispielsweise der zulässige Vorwärtsstrom für die LEDs der LED-Strecke 8 können in diesem Fall in den der Steuereinheit E des zweiten Moduls 2 zugeordneten Speicher 51 geschrieben werden. Dies kann beispielsweise während der Herstellung des zweiten Moduls 2 erfolgen.

Erfindungsgemäss ist das LED-Modul F mit einem Identifikations-Tag versehen, das eine Identifikation für das LED-Modul F darstellt. Das Identifikations-Tag wird dann von der Steuereinheit E des zweiten Moduls 2 ausgelesen und beispielsweise in einen der Steuereinheit E des zweiten Moduls 2 zugeordneten Speicher abgelegt. Dieser somit nur einmal ausgelesene Dateninhalt des Identifikations-Tags kann dann für den weiteren Betrieb des LED-Moduls F verwendet werden.

Wie gesagt, es handelt es sich bei dem Identifikations-Tag um eine reine Identifikation. Das Lampenmanagement-Modul (zweite Modul 2) ermittelt in diesem Fall die Identifikationsdaten und ermittelt dann von einem, von dem LED-Modul F unabhängigen Speicher, beispielsweise auch einen über den externen Bus 10 zugreifbaren Datenbankinhalt, zugehörige Betriebsdaten. Der Ansatz hat natürlich den Vorteil, dass somit die Kosten für den zusätzlichen Speicher 4, beispielsweise ein Eprom des LED-Moduls F eingespart werden können.

Die Möglichkeit des Auslesens des Speichers 4 des LED-Moduls F durch die Steuereinheit E ergibt den Vorteil, dass ein ganz verschiedene LED-Module F mit einem Lampenmanagement-Modul (zweiten Modul 2) kombiniert werden können, wobei die erforderlichen Betriebsdaten dabei aus dem LED-Moduls F ausgelesen werden können und sich das Lampenmanagement-Modul (zweiten Modul 2) somit flexibel an das angeschlossene LED-Modul F anpassen kann.

### Lichtleistungskalibrierung

Vorzugsweise weist das LED-Modul F wie schematisch in Figur 6a, 6b bereits gezeigt, zwei, drei oder noch mehr voneinander unabhängig steuerbare Kanäle 53, 53', 53'' auf. Jeder Kanal 53, 53', 53'' kann eine LED-Strecke 8, 8', 8'' mit einem oder mehrere LEDs aufweisen. Vorzugsweise sind natürlich die LEDs einer LED-Strecke 8, 8', 8" hinsichtlich ihres Spektrums nahezu identisch. Ziel ist es, dass die unterschiedlichen LED-Kanäle 53, 53', 53'' des LED-Moduls F im Farbraum einen Raum aufspannen, innerhalb dessen die gewünschten ansteuerbaren Farbkoordinaten liegen.

Bevorzugt ist dabei eine Ausgestaltung der zwei oder mehreren LED-Kanäle 53, 53', 53'' des LED-Moduls F derart, dass der umspannte Raum zumindest große Bereiche der Planckschen Weißlichtkurve umfasst.

Eine beispielsweise Ausgestaltung könnte also sein:
- ein erster Kanal mit einer oder mehreren monochromatischen blauen LEDs,
- ein zweiter Kanal mit einer oder mehreren monochromatischen roten LEDs und
- ein dritter Kanal mit einer oder mehreren farbstoffkonvertierten LEDs, vorzugweise im grünlichweißen Spektrum.

Bei Vorliegen von drei unterschiedlichen LED-Kanälen wird also im Farbkoordinatensystem (CIE) ein Dreieck aufgespannt. Durch unterschiedliche individuelle Ansteuerung der Intensitäten der unterschiedlichen LED-Kanäle kann jeder Farbort innerhalb des dadurch gebildeten Dreiecks angesteuert werden.

Das obige Beispiel spannt im Farbraum ein Dreieck auf, das zumindest große Bereiche der Planckschen Weißlichtkurve abdeckt. Somit kann durch individuelle Ansteuerung der drei genannten LED-Kanäle im Wesentlichen jeder Punkt der Planckschen Weißlichtkurve angesteuert werden, d.h. es kann weißes Licht mit unterschiedlicher Farbtemperatur ausgesendet werden. Als Ergebnis einer Mischung des Lichts der mehreren LED-Kanäle.

Wie gesagt, um die unterschiedlichen Farborte insbesondere auf der Planckschen Weißlichtkurve anzusteuern, müssen die unterschiedlichen LED-Kanäle mit unterschiedlicher Intensität (Strom) angesteuert werden.

Dies ist bei bekannter ermittelter oder vorab bekannter Effizienz der LEDs der LED-Kanäle rechnerisch möglich, d.h. ausgehend von einer X/Y-Koordinate des gewünschten Farborts kann unmittelbar die anzusteuernde Intensität der einzelnen Kanäle berechnet werden.

Ein Problem ist nunmehr, dass unterschiedliche LEDs unterschiedliche Wirkungsgrade (Lumen/LED-Strom) haben. Insbesondere ist die Kurve des Lichtoutputs (Helligkeit für eine vorgegebene Wellenlänge) bzw. deren Steigung nicht für alle LEDs gleich. Wenn nunmehr unterschiedliche Farborte innerhalb des aufgespannten Dreiecks im Farbkoordinatensystem, insbesondere zum Abfahren der Planckschen Weißlichtkurve angesteuert werden, wird zwar das gewünschte Spektrum erreicht, es wird sich aber normalerweise der Gesamtlichtoutput verändern. Der Gesamtlichtoutput wird dabei tendenziell geringer werden, je höher der Anteil der Intensität von weniger effizienten LEDs ist.

Gemäß einem Aspekt der Erfindung soll nunmehr auch bei einem Abfahren unterschiedlicher Farborte, insbesondere auf der Planckschen Weißlichtkurve, der Gesamtlichtoutput konstant bleiben.

Dazu wird vorab rechnerisch oder experimentell ermittelt, bei welchem Punkt innerhalb der abzufahrenden Farborte innerhalb des aufgespannten Farbdreiecks der minimale Lichtoutput vorliegt. In Kenntnis des minimalen Lichtoutputs können dann die Ansteuerintensitäten für alle anderen anzufahrenden Farborte kalibriert werden, d.h. es werden 'künstlich' die Intensitäten für jeden vom minimalen Lichtoutput abweichenden Farbort herunterskaliert, so dass letztendlich in dem aufgespannten Farbraum überall konstant Licht mit dem minimal erzielbaren Lichtoutput erzeugt wird.

Diese Kalibrierung auf den minimal erzielbaren Lichtoutput erfolgt also mittels eines Kalibrierungsfaktors, der gleichermaßen auf die Intensitäten sämtlicher LED-Kanäle angewandt wird.

Der Kalibrierungsfaktor kann dabei aufgrund der bekannten Wirkungsgrade der verwendeten LEDs berechnet werden.

Für den Fall, dass die Wirkungsgrade der unterschiedlichen LEDs der LED-Strecken 8, 8', 8'' nicht bekannt sein sollten, kann beispielsweise mittels eines Photosensors der Gesamtlichtoutput beim Abfahren unterschiedlicher Farborte, insbesondere in der Art eines Scans der Planckschen Weißlichtkurve unter gleichzeitiger Messung des Gesamtlichtoutputs gemessen werden. Eine derartige Messung ermittelt also einerseits den minimalen Gesamtlichtoutput innerhalb der abzufahrenden Farborte sowie die Abhängigkeit des Gesamtlichtoutputs vom Farbort.

Beispielsweise kann der Kalibrierungsfaktor zur Verringerung der Intensitäten der einzelnen LED-Strecken im Sinne eines PWM-Dimmens (durch Änderung der Pulsweite der Ansteuerung) durchgeführt werden. Somit wird vorzugsweise das Kalibrieren durch eine Verringerung des Tastverhältnisses einer PWM-Ansteuerung erzeugt. Es kann dies aber auch durch eine Anpassung der Amplitude erfolgen (im Sinne eines Amplitudendimmens). Gerade wenn das Dimmen bzw. Einstellen der Intensität über eine Pulsweiten-Modulation (PWM) erfolgt, kann die Kalibrierung über einer Anpassung der Amplitude erfolgen.

Der genannte Intensitätsscan kann wiederholt ausgeführt werden, da nämlich die unterschiedlichen LEDs hinsichtlich ihres Wirkungsgrads (Intensität pro Strom) unterschiedliche Alterungserscheinungen aufweisen, die kompensiert werden müssen und zu unterschiedlichen Wirkungsgraden führen können. Insbesondere eine farbstoffkonvertierte LED wird einen höheren Grad an Alterung aufweisen als monochromatische LEDs.

Der genannte Intensitätsscan kann aber auch zur Überwachung der Alterung eingesetzt werden, wenn die Betriebsdaten der LED bekannt sind (beispielsweise in dem Speicher 4 des LED-Modul F abgelegt sind).

Derartige Alterungsparameter können indessen auch bereits herstellerseitig ermittelt und beispielsweise in dem Speicher 4 abgelegt werden, der dem LED-Modul F zugeordnet ist.

Liste der Bezugzeichen
- 1:: erstes Modul
- 2, 2' :: zweites Modul
- 3:: Zugriff von E auf 4
- 4:: Speicher
- 5:: DC-Versorgungsspannung
- 6:: Kommunikationsschnittstelle
- 7:: Ausgang
- 8, 8', 8'':: LED-Strecke
- 9:: Eingangsspannung
- 10:: externer Bus
- 11:: Datenschnittstelle
- 12:: Gehäuse
- 13:: Rückführgröße von 8
- 14:: Wechselrichter
- 15:: Resonanzkreis
- 16:: Induktivität
- 17:: Koppelkondensator
- 18:: Induktivität
- 19:: Transformator
- 20:: Primärwicklung
- 21:: Sekundärwicklung
- 22:: Gleichrichter
- 23:: Speicherkondensator
- 24:: Messwiderstand
- 29:: Mittenpunkt
- 30:: Sekundärwicklung
- 31:: Diode
- 32:: Kondensator
- 33:: Sekundärwicklung

- 40:: Kühlmittel
- 41:: Aktoren oder Sensoren
- 42:: Diode
- 43:: Kondensator
- 50:: Kühlmittelansteuerung
- 51:: Speicher
- 52:: Speicher, der mit der Steuereinheit G verbunden ist
- 53, 53', 53'' :: LED-Kanal

- A:: erstes Untermodul
- B:: zweites Untermodul
- C:: weiteres Untermodul
- D:: Schnittstelleschaltung
- E:: Steuereinheit
- F:: LED-Modul
- G:: Steuereinheit

- Lm:: Hauptinduktivität
- R1:: Anlaufwiderstand
- S1:: Schalter
- S2:: Schalter
- S3:: Schalter
- V_{Bus}:: Busspannung
- V_{CCP}:: primärseitige Niedervoltspannungsversorgung
- V_{CCs}:: sekundärseitige DC-Niedervoltspannungsversorgung

## Patentansprüche

1. Modulare LED-Beleuchtung,
aufweisend ein erstes Modul (1), dem eine Eingangsspannung (9) zuführbar ist und das aufweist:
- ein zweites Untermodul (B), wobei das zweite Untermodul (B) einen Halbbrücken-Wechselrichter (14) und einen LLC-Resonanzkreis (15) aufweist, wobei der LLC-Resonanzkreis (15) an einen Mittenpunkt (29) des Halbbrücken-Wechselrichters (14) anschließt, und
- eine Steuereinheit (G),
weiterhin aufweisend ein zweites Modul (2), das ein mit der DC-Ausgangsspannung des ersten Moduls (1) versorgtes weiteres Untermodul (C) mit einer getakteten Konstantstromquelle aufweist, die von einer Steuereinheit (E) des zweiten Moduls (2) gesteuert ist, und
- ein LED-Modul (F), das wenigstens eine LED-Strecke (8) aufweist und das von dem weiteren Untermodul (C) versorgt ist, **dadurch gekennzeichnet, dass** das LED-Modul (F) mit einem Identifikations-Tag versehen ist, das von der Steuereinheit (E) des zweiten Moduls (2) ausgelesen und in einem der Steuereinheit (E) des zweiten Moduls (2) zugeordneten Speicher abgelegt wird,
wobei das Identifikations-Tag reine Identifikationsdaten bereitstellt, und
wobei das zweite Modul ausgebildet ist, um die Identifikationsdaten zu ermitteln, und basierend darauf, Betriebsdaten des LED-Moduls (F) aus einem von dem LED-Modul (F) unabhängigen Speicher zu ermitteln.

2. LED-Beleuchtung nach Anspruch 1,
wobei die Steuereinheit (G) des ersten Moduls (1) und die Steuereinheit (E) des zweiten Moduls (2) in Datenkommunikation über eine Kommunikationsschnittstelle (6) stehen.

3. LED-Beleuchtung nach Anspruch 2,
wobei die interne Datenkommunikation zwischen erstem Modul (1) und dem zweiten Modul (2) standardisiert ist, d.h. unabhängig von einer externen Bus-Kommunikation des ersten Moduls (1) ist.

4. LED-Beleuchtung nach einem der vorhergehenden Ansprüche,
wobei das erste Modul (1) neben der DC-Versorgungsspannung (5) für das weitere Untermodul (C) weiterhin eine DC-Niedervoltspannungsversorgung (V_{ccs}) für das zweite Modul (2) bereitstellt.

5. LED-Beleuchtung nach einem der vorhergehenden Ansprüche,
wobei das zweite Modul (2) und das LED-Modul (F) in einem gemeinsamen Gehäuse (12) untergebracht sind.

6. LED-Beleuchtung nach Anspruch 5,
wobei mit dem gemeinsamen Gehäuse (12) ein aktives und/oder passives Kühlmittel (40) verbunden ist.

7. LED-Beleuchtung nach einem der vorhergehenden Ansprüche,
wobei die Steuereinheit (G) des ersten Moduls (1) vorzugsweise unter Potentialtrennung durch eine Schnittstellenschaltung (D) über einen externen Bus (10) ansprechbar ist.

8. LED-Beleuchtung nach einem der vorhergehenden Ansprüche,
wobei das zweite Modul (B) ein isolierter energergieübertragender DC/DC-Wandler ist.

9. LED-Beleuchtung nach einem der vorhergehenden Ansprüche,
wobei mehrere zweite Module (2) von dem ersten Modul (1) mit DC-Spannung versorgt werden.

10. LED-Beleuchtung nach einem der vorhergehenden Ansprüche,
wobei das erste Modul (1) ein oder mehrere angeschlossene zweiten Module (2) parallel mit wenigstens zwei DC-Spannungen mit unterschiedlichem Pegel versorgt.

## Claims

1. A modular LED-light,
having a first module (1), to which an input voltage (9) can be supplied and which has:
- a second sub-module (B), wherein the second sub-module (B) has a half-bridge inverter (14) and an LLC resonant circuit (15),
wherein he LLC resonant circuit (15) connects to a midpoint (29) of the half-bridge inverter (14), and
- a control unit (G),
further having a second module (2), which has a further sub-module (C) supplied with the DC output voltage of the first module (1) with a clocked constant current source, which is controlled by a control unit (E) of the second module (2), and
- an LED module (F), which has at least one LED series (8) and which is supplied by the further sub-module (C),
**characterized in that**
the LED module (F) is provided with an identification tag, which is read out by the control unit (E) of the second module (2) and is stored in a memory associated with the control unit (E) of the second module (2),
wherein the identification tag provides pure identification data, and
wherein the second module is designed, in order to determine the identification data, and based thereon, to determine operating data of the LED module (F) from a memory that is independent of the LED module (F).

2. The LED-light according to Claim 1,
wherein the control unit (G) of the first module (1) and the control unit (E) of the second module (2) are in data communication via a communication interface (6).

3. The LED-light according to Claim 2,
wherein the internal data communication between the first module (1) and the second module (2) is standardized, that is, is independent of an external bus-communication of the first module (1).

4. The LED-light according to any one of the preceding claims,
wherein the first module (1) in addition to the DC supply voltage (5) for the further sub-module (C) further provides a DC low voltage power supply (V_{ccs}) for the second module (2).

5. The LED-light according to any one of the preceding claims,
wherein the second module (2) and the LED module (F) are housed in a common housing (12).

6. The LED-light according to Claim 5,
wherein an active and/or passive coolant (40) is connected to the common housing (12).

7. The LED-light according to any one of the preceding claims,
wherein the control unit (G) of the first module (1) can be addressed preferably with potential separation by an interface circuit (D) via an external bus (10).

8. The LED-light according to any one of the preceding claims,
wherein the second module (B) is an insulated energy-transmitting DC/DC converter.

9. The LED-light according to any one of the preceding claims,
wherein a plurality of second modules (2) is supplied by the first module (1) with DC voltage.

10. The LED-light according to any one of the preceding claims,
wherein the first module (1) supplies one or more connected second modules (2) in parallel with at least two DC voltages having a different level.

## Revendications

1. Eclairage à LED modulaire,
comportant un premier module (1) auquel une tension d'entrée (9) peut être acheminée et qui comporte :
- un deuxième sous-module (B), le deuxième sous-module (B) comportant un onduleur en demi-pont (14) et un circuit résonant LLC (15), le circuit résonant LLC (15) se connectant à un point central (29) de l'onduleur en demi-pont (14), et
- une unité de commande (G),
comportant également un deuxième module (2) qui comporte un autre sous-module (C) alimenté avec la tension de sortie cc du premier module (1) avec une alimentation stabilisée en courant cadencée qui est commandée par une unité de commande (E) du deuxième module (2), et
- un module de LED (F) qui comporte au moins un rampe de LED (8) et qui est alimenté par l'autre sous-module (C),
**caractérisé en ce que**
le module de LED (F) est muni d'une étiquette d'identification qui est lue par l'unité de commande (E) du deuxième module (2) et qui est enregistrée dans une mémoire affectée à l'unité de commande (E) du deuxième module (2),
l'étiquette d'identification fournissant de pures données d'identification, et le deuxième module étant constitué pour déterminer les données d'identification et, sur cette base, déterminer des données de fonctionnement du module de LED (F) à partir d'une mémoire indépendante du module de LED (F).

2. Eclairage à LED selon la revendication 1,
l'unité de commande (G) du premier module (1) et l'unité de commande (E) du deuxième module (2) étant en communication de données par le biais d'une interface de communication (6).

3. Eclairage à LED selon la revendication 2,
la communication de données interne entre le premier module (1) et le deuxième module (2) étant standardisée, c'est-à-dire étant indépendante d'une communication bus externe du premier module (1).

4. Eclairage à LED selon l'une des revendications précédentes,
le premier module (1) fournissant, outre la tension d'alimentation cc (5) pour l'autre sous-module (C), également une alimentation en tension basse tension (V_{ccs}) pour le deuxième module (2).

5. Eclairage à LED selon l'une des revendications précédentes,
le deuxième module (2) et le module de LED (F) étant logés dans un boîtier (12) commun.

6. Eclairage à LED selon la revendication 5,
un agent réfrigérant (40) actif et/ou passif étant raccordé au boîtier (12) commun.

7. Eclairage à LED selon l'une des revendications précédentes,
l'unité de commande (G) du premier module (1) pouvant être sollicitée par le biais d'un bus (10) externe, de préférence avec séparation de potentiel par un circuit d'interface (D).

8. Eclairage à LED selon l'une des revendications précédentes,
le deuxième module (B) étant un convertisseur cc/cc isolé transmetteur d'énergie.

9. Eclairage à LED selon l'une des revendications précédentes,
plusieurs deuxièmes modules (2) étant alimentés en tension cc par le premier module (1).

10. Eclairage à LED selon l'une des revendications précédentes,
le premier module (1) alimentant un ou plusieurs deuxièmes modules (2) connectés, parallèlement avec au moins deux tensions cc de niveau différent.
